# EUROPÄISCHE PATENTSCHRIFT

(11) **EP 3 783 306 B1**
(45) Veröffentlichungstag und Bekanntmachung des Hinweises auf die Patenterteilung: **15.02.2023**
(21) Anmeldenummer: 19192970.2
(22) Anmeldetag: 21.08.2019
(51) Int. Cl.: G01C 5/04, G01L 15/00

(54) **VORRICHTUNG ZUR MESSUNG VON RELATIVEN HÖHEN**
DEVICE FOR MEASURING RELATIVE HEIGHTS
DISPOSITIF DE MESURE DE HAUTEURS RELATIVES

(43) Veröffentlichungstag der Anmeldung: 24.02.2021
(73) Patentinhaber: Hexagon Technology Center GmbH, 9435 Heerbrugg (CH)
(72) Erfinder: HINDERLING, Jürg, 9437 Marbach (CH); REBHANDL, Wolfgang, 6850 Dornbirn (AT); SCHEJA, Jochen, 6845 Hohenems (AT)
(74) Vertreter: Kaminski Harmann

(56) Entgegenhaltungen:
- EP-A2- 1 365 210
- WO-A1-2013/149638
- DE-A1- 2 739 975
- DE-A1-102010 038 573
- DE-U1- 29 709 876
- MIAOMIAO HUA ET AL: "A closed-loop adjusting strategy for wireless HART time synchronization", COMMUNICATIONS AND INFORMATION TECHNOLOGIES (ISCIT), 2011 11TH INTERNATIONAL SYMPOSIUM ON, IEEE, 12. Oktober 2011 (2011-10-12), Seiten 131-135, XP032027604, DOI: 10.1109/ISCIT.2011.6089716 ISBN: 978-1-4577-1294-4

## Beschreibung

### -FACHGEBIET DER ERFINDUNG-

Die Erfindung betrifft eine Vorrichtung zur Bestimmung von relativen Höhen zwischen zwei Punkten in Richtung der Schwerelinie.

### -HINTERGRUND-

In der Geodäsie und im Baugewerbe werden neben klassischen Messhilfsmitteln wie Senklote, Zollstöcke und Schlauchwaagen unterschiedliche Messgeräte verwendet um vertikale Abstände bzw. Abstände in Gravitationsrichtung zu messen oder Abzustecken. Die dafür am häufigsten verwendeten und auch einfach zu bedienenden Messgeräte sind die optischen Nivelliergeräte mit automatisch nivellierender Sichtlinie, die Linienlaser, die Punktlaser und die Laserrotatoren/Rotationslaser. Mit Meterstab oder Messlatte wird dann von den jeweiligen meist optischen waagrechten Höhenebenen die Höhe zu den abzusteckenden Punkten, Linien oder Flächen übertragen. Die optischen Nivelliergeräte sind mit einem optischen Kompensator ausgerüstet, welcher im Wesentlichen aus einem optischen Umlenkprisma besteht, welches mit einem Schwerependel verbunden ist. Der optische Kompensator garantiert dabei die nivellierte Sichtlinie. Die Linien- und Punktlaser besitzen zur nivellierten Aussendung der Laserstrahlung eine Lasereinheit die an einem kardanisch gelagerten Pendel montiert ist. Die Laserrotatoren erzeugen mittels Laserstrahlung eine Horizontalebene. Auch die Laserrotatoren besitzen eine kardanische Aufhängung mit zwei gekreuzten Röhrenlibellen als Waage zur Messung der Horizontallinie oder -ebene. Dieser Libellenblock wird mittels motorischer Stelleinheiten so eingestellt, dass die durch Rotation erzeugte Laserebene horizontal oder unter einem definierten Winkel zur Horizontalebene in eine bestimmte Richtung geneigt ausgerichtet ist. Typischerweise werden solche Messgeräte über Distanzen bis zu 100 m eingesetzt, wobei die Genauigkeit der Höhenmarkierung und Höhenübertragung besser als 1 mm sein kann. Ebenfalls geeignet zur genauen Höhenmessung sind Messgeräte wie Tachymeter oder Totalstationen. Diese Messgeräte sind jedoch für einfache Messaufgaben zu komplex in der Bedienung und zu teuer.

Beispielsweise sind Schlauchwaagen zur relativen Höhenpositionierung bzw. -bestimmung aus unterschiedlichen Anwendungsgebieten aus dem Stand der Technik bekannt aus den Dokumenten WO 2013/149638 A1, DE 27 39 975 A1 oder EP 1 365 210 A2.

Was fehlt ist ein handliches Messgerät, um Höhen von einem Punkt, beispielsweise von einer Referenzhöhenmarke ausserhalb einer Baustelle zu einem beliebigen Punkt auf der Baustelle zu übertragen. Dabei sollte die Aufgabe von einer einzigen Person ausgeführt werden können und zudem sollte das Messgerät von leichter und kompakter Bauform sein, sodass es handgetragen eingesetzt werden kann. Herkömmliche Messgeräte brauchen eine definierte stabile Aufstellung, um die elektronische Selbstnivellierung ausführen zu können. Im handgetragenen Zustand ist beispielsweise ein Linienlaser nicht in der Lage eine automatische Ausrichtung zu erreichen. Des Weiteren ist die absolute Höhe des Messgeräts beispielsweise des Linienlasers nach einer Aufstellung auf der Baustelle bezogen auf definierte Referenzpunkte unbestimmt. Es braucht zusätzliche Hilfsmittel wie Zollstock oder Messlatte um die Messgerätehöhe oder die Laserstrahlhöhe zu bestimmen, was aufwändig ist und gelegentlich zu Fehlmessungen führt. Ein rein beispielhafter Arbeitsablauf umfasst den Höhentransfer von einer ausserhalb einer Baustelle platzierten Referenzhöhenmarke H₀ auf das Gelände der Baustelle. Dies insbesondere in der Phase des Bauaushubs und der Erstellung des Fundaments. Anschliessend werden bei jeder weiteren Bauphase beispielsweise bei der Erstellung der Etagenböden eines Gebäudes weitere Höhen von der Referenzhöhe H₀ mittels Messgeräte abgeleitet und abgesteckt. Dieser Prozess ist heute aufwändig und fehleranfällig. Mit einer handlichen Vorrichtung zur Bestimmung von relativen Höhen sollen beispielsweise ebensolche Arbeitsabläufe vereinfacht und verbessert werden.

Es ist deshalb eine Aufgabe der vorliegenden Erfindung eine gegenüber den Messgeräten des Standes der Technik im Handling vereinfachte, flexibler einsetzbare und gleichzeitig die Messsicherheit betreffend robustere Vorrichtung zur Bestimmung von relativen Höhen bereitzustellen.

### -BESCHREIBUNG DER ERFINDUNG-

Die Erfindung betrifft eine Vorrichtung zur Bestimmung von relativen Höhen zwischen zwei Punkten, mit einem mit einer Flüssigkeit gefüllten Verbindungsschlauch mit zwei sich gegenüberliegenden Enden, einem ersten und einem zweiten Drucksensor, angeordnet an den sich gegenüberliegenden Enden des Verbindungsschlauchs, wobei die Drucksensoren über die Flüssigkeit miteinander verbunden sind und die Flüssigkeit von dem Verbindungsschlauch gegen Aussen gasdicht abgeschlossen wird und wobei der erste Drucksensor dazu konfiguriert ist einen hydrostatischen Druck der Flüssigkeit an dem einen Ende des Verbindungsschlauchs in der Flüssigkeit zu messen und der zweite Drucksensor dazu konfiguriert ist einen hydrostatischen Druck der Flüssigkeit an dem anderen dem einen Ende gegenüberliegenden Ende des Verbindungsschlauchs in der Flüssigkeit zu messen, und einem Prozessor, welcher dazu konfiguriert ist, eine relative Höhe zwischen einem ersten Referenzpunkt mit einer fixen Positionsrelation zu dem ersten Drucksensor und einem zweiten Referenzpunkt mit einer fixen Positionsrelation zu dem zweiten Drucksensor basierend auf den vom ersten und vom zweiten Drucksensor gemessenen hydrostatischen Drücken zu bestimmen, wobei durch den Prozessor die gemessenen hydrostatischen Drücke einem gleichen gemeinsamen Messzeitpunkt zuordenbar sind und die Bestimmung der relativen Höhe basierend darauf erfolgt.

Gemäss einer Ausführungsform kann die Vorrichtung einen ersten und einen zweiten Temperatursensor aufweisen, wobei jeder der Temperatursensoren einem Drucksensor zugeordnet ist, der erste Temperatursensor dazu konfiguriert ist die Temperatur beim ersten Drucksensor, insbesondere in der Flüssigkeit, zu messen, der zweite Temperatursensor dazu konfiguriert ist die Temperatur beim zweiten Drucksensor, insbesondere in der Flüssigkeit, zu messen, und der Prozessor dazu konfiguriert ist die relative Höhe auch basierend auf den gemessenen Temperaturen zu bestimmen, insbesondere um thermische Einflüsse auf die relative Höhe (h) zu berücksichtigen.

Gemäss einer weiteren Ausführungsform kann die Vorrichtung einen Synchronisator aufweisen wobei der Synchronisator dazu konfiguriert ist einen ersten Messzeitpunkt zu welchem der erste Druck- und/oder Temperatursensor misst mit einem zweiten Messzeitpunkt zu welchem der zweite Druck- und/oder Temperatursensor misst zu synchronisieren, wobei der Prozessor dazu konfiguriert ist basierend auf den synchronisierten Messzeitpunkten die gemessenen hydrostatischen Drücke einem gleichen gemeinsamen Messzeitpunkt zuzuordnen.

In einer vorteilhaften Ausführungsform kann die Vorrichtung jeweils ein Wireless-Modul an jedem Ende des Verbindungsschlauchs aufweisen, wobei die Sensoren mit dem jeweiligen Wireless-Modul verbunden sind, und die Wireless-Module dazu konfiguriert sind ein Wireless-Triggersignal zu empfangen und zu verarbeiten, und wobei der Synchronisator dazu konfiguriert ist die Messzeitpunkte basierend auf einem Wireless-Triggersignal zu synchronisieren, sodass die Sensoren Druck und/oder Temperatur synchronisiert basierend auf dem Wireless-Triggersignal messen.

Erfindungsgemäss weist die Vorrichtung weitere Drucksensoren an jedem Ende des Verbindungsschlauchs auf, wobei die Drucksensoren am jeweiligen Ende des Verbindungsschlauchs um einen gemeinsamen Mittelpunkt angeordnet sind und eine fixe Positionsrelation zueinander haben, wobei der Prozessor dazu konfiguriert ist, die relative Höhe basierend auf Mittelwerten der mittels der Drucksensoren am jeweiligen Ende des Verbindungsschlauchs gemessenen Drücke zu bestimmen, und/oder eine Lage des jeweiligen Endes des Verbindungsschlauchs in Relation zu einem Referenzpunkt basierend auf den mittels der Drucksensoren am jeweiligen Ende des Verbindungsschlauchs gemessenen Drücken, insbesondere Druckdifferenzen, zu bestimmen und die relative Höhe auch basierend auf der Lage zu bestimmen.

Gemäss einer vorteilhaften Ausführungsform der Vorrichtung kann diese weitere Temperatursensoren aufweisen und der Verbindungsschlauch (2) über seine Länge verteilt mehrere Temperaturmessbereiche haben, wobei jedem Temperaturmessbereich zumindest einer der weiteren Temperatursensoren zugeordnet ist, die weiteren Temperatursensoren dazu konfiguriert sind die Temperatur im zugeordneten Temperaturmessbereich, insbesondere in der Flüssigkeit, zu messen, und der Prozessor dazu konfiguriert ist die relative Höhe (h) auch basierend auf den in den Temperaturmessbereichen des Verbindungsschlauchs (2) gemessenen Temperaturen zu bestimmen, insbesondere um thermische Einflüsse auf die relative Höhe (h) zu berücksichtigen.

Gemäss einer weiteren vorteilhaften Ausführungsform der Vorrichtung kann der Verbindungsschlauch (2) eine erste (44) und eine zweite Schlauchkammer (45) aufweisen, wobei die Schlauchkammern voneinander getrennt sind und aneinander anliegend entlang des Verbindungsschlauchs verlaufen, die erste Schlauchkammer (44) mit der die Drucksensoren verbindenden Flüssigkeit gefüllt ist und die zweite Schlauchkammer (45) einen Zirkulationsbereich für ein darin bewegbares Medium bereitstellt.

Gemäss einer spezifischen Ausführungsform kann der Prozessor eine Kalibrationsfunktionalität aufweisen und dazu konfiguriert sein eine relative Höhe zwischen zwei Referenzpunkten basierend auf ermittelten hydrostatischen Druckdifferenzen zu bestimmen, wobei durch den Prozessor die ermittelten hydrostatischen Druckdifferenzen mittels einer Kalibrationsrelation relativen Höhen zugeordnet werden, und mittels der Kalibrationsfunktionalität die Kalibrationsrelation basierend auf einer definierten Positionierung der beiden Enden des Verbindungsschlauchs relativ zueinander zu bestimmen.

In einer weiteren möglichen Ausführungsform der Vorrichtung sind einem Drucksensor mehrere Referenzpunkte mit einer fixen Positionsrelation zu dem Drucksensor zugeordnet.

Gemäss einer spezifischen Ausführungsform kann die Vorrichtung jeweils ein Lagemessmodul an den beiden Enden des Verbindungsschlauchs aufweisen, wobei die Lagemessmodule mindestens einen Beschleunigungssensor aufweisen und dazu konfiguriert sind die Lage des jeweiligen Drucksensors in Relation zu einem Referenzpunkt mit fixer Positionsrelation zum jeweiligen Drucksensor zu bestimmen und der Prozessor dazu konfiguriert ist die relative Höhe basierend auf der Lage der Drucksensoren zu bestimmen, insbesondere wobei an beiden Enden des Verbindungsschlauchs die jeweiligen Komponenten in jeweils ein Gehäuse integriert sind, welches zum Handgetragenwerden ausgebildet und konfiguriert ist. Dabei können Komponenten beispielsweise eine Auswahl aus: Drucksensor, Prozessor, Temperatursensor, Synchronisator, Wireless-Modul, Lagemessmodul sein.

In einer weiteren Ausführungsform kann die Vorrichtung ein Druckausgleichsgefäss an einem Ende des Verbindungsschlauchs aufweisen, wobei das Druckausgleichsgefäss dazu konfiguriert ist einen Basisdruck im Verbindungsschlauch einzustellen und konstant zu halten, und/oder einen Über- bzw. Unterdruck im Verbindungsschlauch gegenüber einem äusseren Luftdruck auszugleichen und/oder zu begrenzen.

Gemäss einer weiteren Ausführungsform kann die Vorrichtung einen optischen ortsauflösenden Detektor (OAD) an einem Ende des Verbindungsschlauches aufweisen, wobei der optische OAD eine fixe Positionsrelation zu dem Drucksensor hat und dazu konfiguriert ist optische Referenzstrahlung positionssensitiv an einem OAD-Punkt zu detektieren und wobei der Prozessor dazu konfiguriert ist eine OAD-Höhe zwischen dem Drucksensor und dem OAD-Punkt zu ermitteln und die relative Höhe basierend auf der OAD-Höhe zu bestimmen insbesondere die relative Höhe zwischen einem Referenzpunkt und dem OAD-Punkt zu bestimmen.

In einer Ausführungsform kann die Vorrichtung ein Display und/oder eine Eingabetastatur mit Bedienfeldern an mindestens einem Ende des Verbindungsschlauchs aufweisen, wobei der Prozessor dazu konfiguriert ist am jeweiligen Ende des Verbindungsschlauchs Informationen betreffend die gemessenen Temperaturen und Drücke, insbesondere relative Höhenpositionen der Verbindungsschlauchenden und die relative Höhe, über das Display anzuzeigen und/oder Anweisungen, die über die Bedienfelder der Eingabetastatur eingegeben werden auszuführen.

Gemäss einer Ausführungsform kann der Prozessor dazu konfiguriert sein von einem mobilen Computer mit einem Display, insbesondere einem Touchscreen, ferngesteuert zu werden und Informationen betreffend die gemessenen Temperaturen und Drücke, insbesondere relative Höhenpositionen der Verbindungsschlauchenden und die relative Höhe, über das Display des mobilen Computers anzuzeigen.

In einer weiteren möglichen Ausführungsform kann die Vorrichtung eine Halterung an mindestens einem Verbindungsschlauchende aufweisen, wobei die Halterung dazu ausgelegt ist einen mobilen Computer aufzunehmen und zu fixieren.

Gemäss einer Ausführungsform kann die Vorrichtung ein optisches Distanzmessgerät mit einem Neigungssensor an einem Ende des Verbindungsschlauchs aufweisen, wobei das optische Distanzmessgerät eine fixe Positions- und Lagerelation zu dem Drucksensor hat und dazu konfiguriert ist mittels optischer Distanzmessstrahlung absolute Distanzen zu angezielten Punkten zu messen und wobei der Prozessor dazu konfiguriert ist basierend auf der bestimmten relativen Höhe zwischen dem einen ersten und dem einen zweiten Referenzpunkt, der mittels des Neigungssensors gemessenen Neigung der optischen Distanzmessstrahlung, und der zu einem angezielten Punkt gemessenen Distanz die relative Höhe zwischen dem einen ersten Referenzpunkt und dem vom optischen Distanzmessgerät angezielten Punkt zu bestimmen.

In einer weiteren Ausführungsform kann die Vorrichtung aufweisen: eine Kopplungsvorrichtung an mindestens einem Ende des Verbindungsschlauchs, wobei die Kopplungsvorrichtung dazu konfiguriert ist weitere Messgeräte an- und wieder abzukoppeln und einen dementsprechend angekoppelten oder abgekoppelten Zustand als Kopplungsstatus dem Prozessor bereitzustellen, eine elektronische Identifikationsmarke an mindestens einem Ende des Verbindungsschlauchs, und ein elektronische Identifikationsmarken Lesegerät, wobei der Prozessor dazu konfiguriert ist eine relative Höhe auch basierend auf mindestens einer vom Lesegerät gelesenen elektronischen Identifikationsmarke und auf dem Kopplungsstatus zu bestimmen.

In einer spezifischen Ausführungsform kann die Vorrichtung einen Reflektor an einem Ende des Verbindungsschlauchs aufweisen, wobei der Reflektor einen Referenzpunkt aufweist der eine fixe Positionsrelation zu dem Drucksensor hat und dazu konfiguriert ist Referenzstrahlung eines Messgeräts zu reflektieren, wobei die Bestimmung der relativen Höhe basierend auf dem Referenzpunkt des Reflektors erfolgt und/oder einen Signalgeber, wobei der Prozessor mit dem Signalgeber verbunden ist und dazu konfiguriert ist basierend auf einem vordefinierten Kriterium, das die Bestimmung einer relativen Höhe betrifft ein Signal über den Signalgeber auszugeben.

Gemäss einer weiteren spezifischen Ausführungsform kann die Vorrichtung jeweils ein Elektronikboard an den beiden Enden des Verbindungsschlauchs aufweisen, welches ein Wireless-Modul, ein Lagemessmodul, einen Temperatursensor und einen Drucksensor aufweist und miteinander über eine Datenverbindung verbindet, sowie ein erstes Verbindungsstück an dem einen Ende des Verbindungsschlauchs, ein zweites Verbindungsstück an dem anderen dem einen Ende gegenüberliegenden Ende des Verbindungsschlauchs, und einen Tablet-Computer oder ein Smartphone, wobei das erste Verbindungsstück den Verbindungsschlauch, den Drucksensor, ein Druckausgleichsgefäss und ein Entlüftungsventil starr miteinander verbindet, und das zweite Verbindungsstück, den Verbindungsschlauch und den Drucksensor starr miteinander verbindet, insbesondere wobei der Verbindungsschlauch jeweils einen Verbindungsbereich des ersten und zweiten Verbindungsstücks überzieht, und wobei die Wireless-Module und der Tablet-Computer oder das Smartphone eine Datenverbindung untereinander zur Steuerung der Vorrichtung bereitstellen.

Gemäss einer weiteren Ausführungsform der Vorrichtung können die sich gegenüberliegenden Enden des Verbindungsschlauchs in einer bestimmten Positionsrelation zueinander, starr miteinander verbunden sein, wobei der Prozessor dazu konfiguriert ist basierend auf der bestimmten Positionsrelation und der bestimmten relativen Höhe zwischen einem dem einen Ende des Verbindungsschlauchs zugeordneten Referenzpunkt und einem dem anderen Ende des Verbindungsschlauchs zugeordneten Referenzpunkt, einen Neigungswinkel zwischen den sich gegenüberliegenden Enden des Verbindungsschlauchs zu bestimmen.

Gemäss einer weiteren Ausführungsform der Vorrichtung kann diese ein erstes ausziehbares elektronisches Rollmessband mit einem Distanzgeber an einem Ende des Verbindungsschlauchs aufweisen, wobei der Distanzgeber dazu konfiguriert ist einem ausgezogenen Zustand des Rollmessbandes eine dadurch abgesteckte Distanz in Bezug auf das eine Ende des Verbindungsschlauchs zuzuordnen, insbesondere wobei das Rollmessband ein festes und ein ausziehbares Ende aufweist und das ausziehbare Ende an dem anderen dem einen Ende gegenüberliegenden Ende des Verbindungsschlauchs angebracht ist und der Prozessor dazu konfiguriert ist basierend auf der bestimmten relativen Höhe h und der abgesteckten Distanz zwischen den beiden Enden des Verbindungsschlauchs eine horizontale Distanz zwischen den beiden Enden des Verbindungsschlauchs zu bestimmen.

Gemäss einer weiteren spezifischen Ausführungsform kann die Vorrichtung ein zweites ausziehbares elektronisches Rollmessband an dem einen Ende des Verbindungsschlauchs aufweisen, wobei das erste und zweite Rollmessband eine Einheit bilden, die Einheit einen Winkelgeber aufweist und der Winkelgeber dazu konfiguriert ist einen Winkelmesswert für einen Winkel zu ermitteln der durch eine mittels des ersten Rollmessbands abgesteckte Distanz und eine mittels des zweiten Rollmessbands abgesteckte Distanz begrenzt wird.

### -KURZE BESCHREIBUNG DER FIGUREN-

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine schematische Ausführungsform einer erfindungsgemässen Vorrichtung zur Bestimmung von relativen Höhen;
- Fig. 2: eine Ausführungsform der Vorrichtung mit einem Gehäuse;
- Fig. 3a, b, c: weitere Ausführungsformen der Vorrichtung mit mehreren den Drucksensoren zugeordneten Referenzpunkten und einem OAD;
- Fig. 4a, b: weitere Ausführungsformen der Vorrichtung mit einem optischen Distanzmessgerät und gekoppelt mit einer weiteren Vorrichtung;
- Fig. 5: eine weitere Ausführungsform der Vorrichtung gekoppelt mit einem Rotationslaser;
- Fig. 6: eine weitere Ausführungsform der Vorrichtung mit einem OAD im Zusammenwirken mit einem Rotationslaser;
- Fig. 7a, b: mögliche Ausführungsformen von Druckausgleichsgefässen;
- Fig. 8: ein möglicher Messmodus der Vorrichtung;
- Fig. 9: eine Ausführungsform der Vorrichtung mit einem Reflektor an einem Ende des Verbindungsschlauches;
- Fig. 10: mögliche Anordnungen der Drucksensoren an den jeweiligen Enden des Verbindungsschlauches;
- Fig. 11: eine mögliche Ausführungsform der Vorrichtung;
- Fig. 12: eine mögliche Ausführungsform der Vorrichtung zur hauptsächlich horizontalen Nivellierung; und
- Fig. 13: eine mögliche Ausführungsform der Vorrichtung zur Absteckung von Punkten beispielsweise im Gelände.
- Fig. 14: eine mögliche Ausführungsform der Vorrichtung den Aufbau des Verbindungsschlauchs betreffend.

### -DETAILLIERTE BESCHREIBUNG DER ERFINDUNG-

Die Vorrichtung und somit die Anordnungen an den beiden Enden des Verbindungsschlauches sind von kleiner Baugrösse und leichter Bauweise, so dass die Vorrichtung von Hand tragbar ist und batteriebetrieben werden kann. Das Messgerät besteht im Wesentlichen aus zwei Endstücken/Boxen die mit einem Verbindungsschlauch, der mit einer Flüssigkeit gefüllt ist verbunden sind. Eine Höhenmessung/Bestimmung der relativen Höhe findet im Wesentlichen zwischen den beiden Endstücken/Boxen statt. Die Vorrichtung ist für verschiedenste Messvorgänge oder -prozesse geeignet. Beispielsweise kann die relative Höhe zwischen den beiden Endstücken/Boxen direkt bestimmt werden, oder es kann die erste Box als Referenzpunkt stationär deponiert werden und mit der zweiten Box mittels Umsetzen eine relative Höhe zwischen zwei Höhenlinien oder Horizontalflächen gemessen werden. Des Weiteren kann eine Höhe von einer ersten Höhenkote zu einer anderen Höhenkote gleicher Höhe übertragen und abgesteckt werden indem die erste Box bei der einen Höhenkote fixiert wird und die zweite Box mobil zur Absteckung verwendet wird.

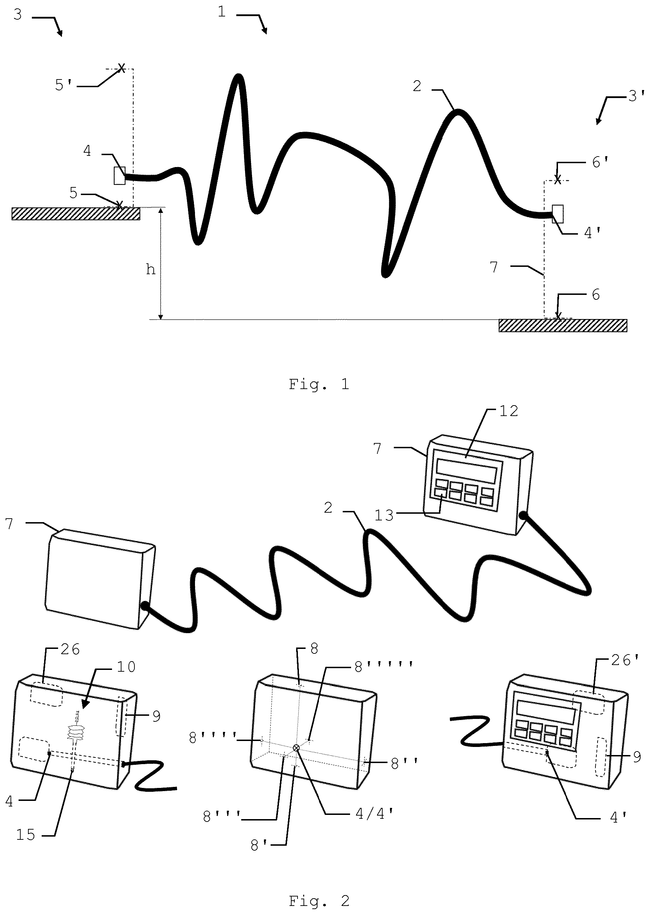

Figur 1 zeigt eine schematische Ausführungsform einer erfindungsgemässen Vorrichtung zur Bestimmung von relativen Höhen zwischen zwei Punkten oder Linien.

Die Vorrichtung 1 weist einen mit einer Flüssigkeit gefüllten Verbindungsschlauch 2 auf. Der Verbindungsschlauch 2 ist vorteilhafterweise polymerbasiert und flexibel. Dabei weist das Schlauchmaterial eine hohe chemische Beständigkeit auf und insbesondere eine gute Verträglichkeit mit der Flüssigkeit mit welcher der Verbindungsschlauch 2 gefüllt ist. Ebenso bildet das Schlauchmaterial eine ausreichend effiziente Diffusionsbarriere für gasförmige Stoffe insbesondere Feuchtigkeit, Sauerstoff, CO2 und Stickstoff. Beispielsweise kann der Verbindungsschlauch 2 aus einem Polymer hergestellt sein, welches eine für die Anwendung und unter Berücksichtigung der entsprechenden Schlauchgeometrie ausreichend hohe Steifigkeit aufweist, sodass im Betrieb elastische Verformungen im Schlauchmaterial ausreichend klein sind und somit die Einschwingzeit auf die Höhenmessung kurz ist. Gleiches gilt in analoger Weise für die Temperaturstabilität des Schlauchmaterials. Um die Vorrichtung 1 handlich zu gestalten ist der Verbindungsschlauch 2 flexibel und idealerweise ein Spiralschlauch, womit sich ein Aufwickeln des Verbindungsschlauches 2 auf eine Rolle erübrigt. Aufgrund der Struktur eines Spiralschlauchs ist dieser was die Struktur selbst betrifft elastisch verformbar bzw. dehnbar. Der Verbindungsschlauch 2 kann beispielsweise PVC-basiert, PUbasiert oder auch silikonbasiert sein. Der Verbindungsschlauch 2 kann auch aus einer Art Polymerverbundwerkstoff bestehen. In diesem Fall wird ein Polymer bewusst mit einer verstärkenden Phase in Form von beispielsweise Kurzfasern, Fasern oder Geweben kombiniert wodurch die mechanischen Eigenschaften des Schlauchmaterials verbessert werden. Dieser Verbindungsschlauch ist vollständig mit einer Flüssigkeit gefüllt, sodass keine Lufteinschlüsse vorhanden sind. Die Wahl der Flüssigkeit ist dabei auf die Materialeigenschaften des Verbindungsschlauchmaterials abgestimmt und soll insbesondere einen Gefrierpunkt kleiner als -20° C haben. Dazu eignen sich beispielsweise diverse Öle wie Silikonöl, Transformatorenöl, Mineralöl, eine Ethylenglykol-Wasser Mischung, schwache Säuren, Alkohole aber auch andere organische Flüssigkeiten.

Der Verbindungsschlauch 2 weist zwei sich gegenüberliegende Enden 3 und 3' auf. Diese Enden werden von jeweils einem Drucksensor 4 und 4' so abgeschlossen, dass diese zwei Drucksensoren 4, 4' über die Flüssigkeit miteinander verbunden sind. Dabei sind die Drucksensoren 4, 4' am jeweiligen Ende des Schlauches so angeordnet, dass sie den hydrostatischen Druck am jeweiligen Ende 3, 3' des Verbindungsschlauches in der Flüssigkeit messen können. Ein Drucksensor kann dabei auch Teil eines Sensormoduls sein wobei das Sensormodul das Ende des Verbindungsschlauchs so abschliesst, dass der hydrostatische Druck in der Flüssigkeit gemessen werden kann. Die Anordnung von je einem Sensor an den gegenüberliegenden Enden 3, 3' des Verbindungsschlauches ermöglicht eine, insbesondere gleichzeitige, Messung des hydrostatischen Drucks an den beiden sich gegenüberliegenden Enden des Verbindungsschlauches 2 in derselben Flüssigkeit.

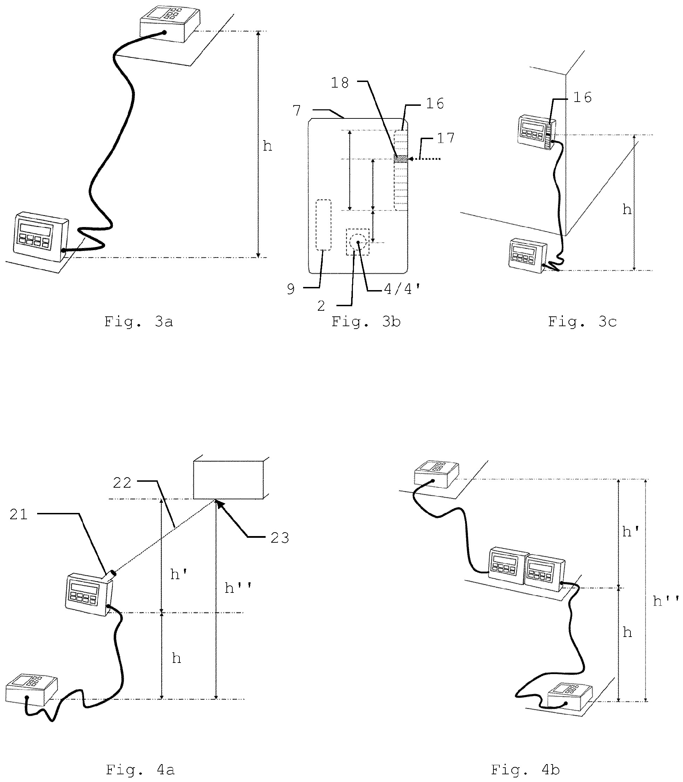

Des Weiteren weist die Vorrichtung 1 einen Prozessor auf. Dieser Prozessor ist Teil einer Hardware, die die nötigen elektronischen und mikroelektronischen Komponenten, Speichermedien und Schnittstellen aufweist um Daten und/oder Signale zu verarbeiten, zu speichern, zu senden und zu empfangen. Ebenso kann die Hardware eine oder mehrere auch unterschiedliche Kühlvorrichtungen, beispielsweise Ventilatoren zur Erzeugung einer Luftzirkulation, zur temperaturkontrollierten Betreibung der Hardware aufweisen. Dabei kann der Prozessor auch mehrere, insbesondere funktional verknüpfte, einzelne Prozessoren aufweisen. All diese Komponenten sind beispielsweise auf einer oder mehreren miteinander verbunden Platinen/Elektronikboards aufgebracht. Ebenso weist die Vorrichtung an jedem Ende 3, 3' des Verbindungsschlauchs mindestens einen Referenzpunkt 5, 5' bzw. 6, 6' auf. Dieser Referenzpunkt hat eine fixe Positionsrelation zu dem jeweiligen Drucksensor 4, 4'. Dabei kann die Positionsrelation zwischen dem Drucksensor und dem Referenzpunkt mittels eines Gehäuses 7 fixiert werden. Idealerweise sind dann wie beispielsweise in Figur 2 gezeigt das Verbindungsschlauchende und der Drucksensor im Gehäuse 7 untergebracht und der Referenzpunkt befindet sich in definierter und fixer Positionsrelation zum Drucksensor am Gehäuse 7. Der Referenzpunkt kann ein Punkt einer Gehäuseaussenfläche 8, 8', 8", 8‴, 8ʺʺ, 8‴ʺ sein oder in definiertem Masse dieser zugeordnet sein, wobei besagte Gehäuseaussenfläche beispielsweise als Auflagefläche oder Ausrichtfläche dient. Ist der Referenzpunkt beispielsweise einer Gehäuseaussenfläche zugeordnet befindet sich der Referenzpunkt in einem definierten und fixen vertikalen (in Bezug auf die Gehäuseaussenfläche) Abstand zum Drucksensor. der Prozessor weist eine Datenverbindung mit den Drucksensoren 4, 4' auf, sodass dieser basierend auf den von den zwei Drucksensoren gemessenen hydrostatischen Drücken eine relative Höhe h oder Distanz in Gravitationsrichtung zwischen einem Referenzpunkt der dem Drucksensor 4 am einen Ende des Verbindungsschlauches 2 zugeordnet ist und einem Referenzpunkt der dem Drucksensor 4' am anderen dem einen Ende gegenüberliegenden Ende zugeordnet ist bestimmen kann, wie dies beispielhaft in Figur 3a gezeigt ist. Die Bestimmung der relativen Höhe h oder Distanz in Gravitationsrichtung basiert dabei auf der Ermittlung einer Differenz zwischen den zwei gemessenen hydrostatischen Drücken. Um einen genauen Messwert für die relative Höhe h zu erhalten ist es entscheidend, dass die Messwerte der beiden Drucksensoren jeweils einem Messzeitpunkt zugeordnet werden können. Dadurch können Messwerte oder auch interpolierte Messwerte, welche dem gleichen Messzeitpunkt zugeordnet werden können verwendet werden um basierend darauf die relative Höhe h zu bestimmen. Die Ermittlung der relativen Höhe h basiert ebenfalls auf der definierten und fixen Positionsrelation der Referenzpunkte zu den zwei Drucksensoren und somit auch auf der vertikalen Distanz bzw. Distanz in Gravitationsrichtung der Referenzpunkte zu dem jeweiligen Drucksensor.

In einer vorteilhaften Variante hat die Vorrichtung 1 an jedem Ende des Verbindungsschlauches einen Temperatursensor. Dieser Temperatursensor dient zur Messung der Temperatur, insbesondere in der Flüssigkeit, bei dem jeweiligen Drucksensor. Da die relative Höhe basierend auf der Differenz der gemessenen hydrostatischen Drücke bestimmt wird und der hydrostatische Druck von der Dichte der Flüssigkeit deren hydrostatischer Druck gemessen wird abhängt wird sich eine Änderung der Dichte der Flüssigkeit auf die ermittelte relative Höhe auswirken. Eine solche Dichteänderung kann beispielsweise aufgrund einer Änderung der Temperatur der Flüssigkeit erfolgen. Durch das Messen der Temperatur an den beiden Verbindungsschlauchenden, wo jeweils der hydrostatische Druck gemessen wird ist es möglich Temperatureinflüsse auf die Dichte der Flüssigkeit bei der Bestimmung der relativen Höhe zu berücksichtigen beispielsweise durch Verwenden von tabellarisch hinterlegten Dichtewerten der Flüssigkeit bei unterschiedlichen Temperaturen, gespeichert in Form einer "Look-up Table". Mittels dieser "Look-up Table" kann der Einfluss der Temperatur auf die Höhenmessung korrigiert werden. Eine die Messung der Drucksensoren beeinflussende Temperaturabhängigkeit der Drucksensoren selber kann beispielsweise mittels in den Drucksensoren integrierten Temperatursensoren bestimmt und die Druckmessung so automatisch korrigiert werden.

In einer möglichen Ausführungsform kann die Vorrichtung 1 einen Synchronisator aufweisen. Dieser Synchronisator dient dem Zwecke der zeitlich synchronisierten Messung der hydrostatischen Drücke und/oder auch der Temperaturen. Dieser Synchronisator besitzt eine logische Uhr, welche monoton steigende Werte generiert basierend darauf die Messung an den Druck- und/oder Temperatursensoren getriggert wird oder basierend darauf den gemessenen Sensorwerten (hydrostatischen Drücken und/oder Temperatur) ein Messzeitpunkt zugeordnet wird. Der Synchronisator kann auch mehrere logische Uhren aufweisen beispielsweise eine für jeden Sensor, wobei die mehreren logischen Uhren dann untereinander synchronisiert sind und wobei dann basierend auf den synchronisierten monoton steigenden Werten der mehreren Uhren die Sensormessungen getriggert werden oder wobei dann basierend auf den synchronisierten monoton steigenden Werten der mehreren logischen Uhren den gemessenen Sensorwerten (hydrostatischen Drücken und/oder Temperatur) ein Messzeitpunkt zugeordnet wird. Zeitlich synchronisiert gemessene Sensorwerte oder einem gemeinsamen Messzeitpunkt zugeordnete Sensorwerte (auch interpolierte Sensorwerte), insbesondere deren Verlauf über ein Zeitintervall können von dem Prozessor dazu verwendet werden die Bestimmung der relativen Höhe beeinflussende Störfaktoren wie beispielsweise Sensorwertfluktuationen zu identifizieren, sodass diese Störfaktoren in der Bestimmung der relativen Höhe nicht berücksichtigt werden bzw. "rausgefiltert" werden. Äussere Einflüsse wie Quetschung oder Schwingen des Verbindungsschlauchs können durch eine synchrone Druckmessung an den beiden Schlauchenden massgeblich reduziert werden. Eine weitere Massnahme, um das störende Schwingen des Verbindungsschlauchs zu reduzieren, ist das verteilte Platzieren von mechanischen Dämpfungsfiltern in der Flüssigkeit, wobei die Dämpfungsfilter im Schlauch und/oder nahe bei den Schlauchenden angebracht werden. Filterwirkung haben Lamellen, Membranen, oder schwammartige Schaumstoffe. Diese Hilfsmittel reduzieren die Schwankungen der hydrostatischen Druckamplituden der Flüssigkeit.

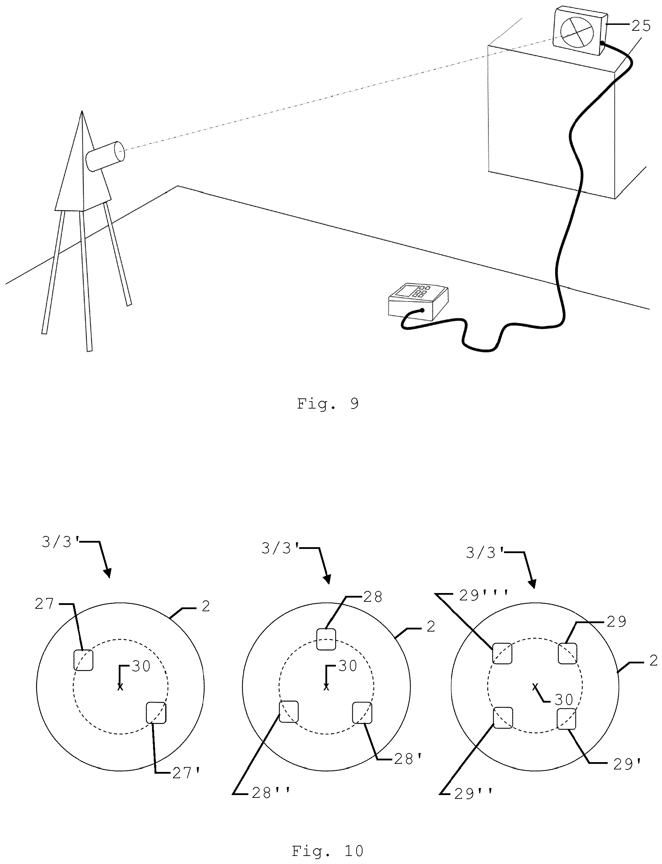

Gemäss der Erfindung weist die Vorrichtung 1 an jedem der Verbindungsschlauchenden mehrere Drucksensoren 27, 27', 28, 28', 28", 29, 29', 29'', 29‴ zur Messung des hydrostatischen Drucks auf. Dabei können diese Drucksensoren eine fixe Positionsrelation zueinander haben und beispielsweise um den Mittelpunkt 30 des ringförmigen Verbindungsschlauchquerschnitts an den Enden des Verbindungsschlauchs angeordnet sein, wie beispielhaft in Figur 10 gezeigt. Die von den mehreren Drucksensoren an einem Ende des Verbindungsschlauchs gemessenen hydrostatischen Drücke können dann gemittelt werden und als Mittelwert in die Bestimmung der relativen Höhe einbezogen werden. Dadurch kann die Messgenauigkeit sowohl statistisch als auch absolut verbessert werden. Zusätzlich können diese mehreren Drucksensoren auch so angeordnet werden, dass sie als redundantes Sensorsystem konfiguriert werden können und somit zur Erhöhung der Ausfall-, Funktions- und Betriebssicherheit der Vorrichtung beitragen. Des Weiteren können die Drucksensoren, welche an dem jeweiligen Ende des Verbindungsschlauchs um einen gemeinsamen Mittelpunkt angeordnet sind, ermöglichen, dass anhand der ermittelten hydrostatischen Druckdifferenzen, zwischen den Drucksensoren, welche am gleichen Ende des Verbindungsschlauchs angeordnet sind auf eine Lage dieses Endes in Relation zu einem Referenzpunkt geschlossen werden kann. Dies wird dann ermöglicht, wenn aufgrund der Lage des Verbindungsschlauchendes und aufgrund der definierten Anordnung der Drucksensoren an diesem Ende ein, einer bestimmten Lage zuordenbarer Höhenunterschied in Gravitationsrichtung zwischen den Drucksensoren resultiert. Diese so ermittelte Information zur Lage der beiden Enden des Verbindungsschlauchs kann dann von dem Prozessor verwendet werden, um die relative Höhe zwischen den zwei Referenzpunkten zu bestimmen. Sollten den Enden des Verbindungsschlauchs bzw. deren Sensoren mehrere Referenzpunkte zugeordnet sein kann die Information zur Lage der beiden Enden des Verbindungsschlauchs vom Prozessor dazu verwendet werden die zwei Referenzpunkte zwischen denen die relative Höhe bestimmt wird aus einer Gruppe von möglichen Referenzpunktpaaren zu bestimmen.

Die Bestimmung der relativen Höhe durch den Prozessor erfolgt basierend auf einer gemessenen hydrostatischen Druckdifferenz zwischen den zwei Enden des Verbindungsschlauchs. Beispielsweise kann der Prozessor durch auslesen einer abgespeicherten Korrelationstabelle, welche hydrostatische Druckdifferenzen bestimmten relativen Höhen zuordnet, die relative Höhe zwischen zwei Referenzpunkten bestimmen. Dabei basiert die Korrelationstabelle auf einer Kalibrationsrelation. Ebenso wäre es denkbar, dass die gemessene Druckdifferenz mittels einer Kalibrationsrelation einer relativen Höhe zugeordnet wird. Die Kalibrationsrelation schafft einen vorrichtungsspezifischen und lagespezifischen Zusammenhang zwischen gemessenen Druckdifferenzen und relativen Höhen. Die Kalibrationsrelation kann beispielsweise eine mathematische Funktion sein, welche die relative Höhe als Funktion der gemessenen Druckdifferenz berechnet.

Vorteilhafterweise weist die Vorrichtung weitere Temperatursensoren auf, welche am oder im Verbindungsschlauch angeordnet sein können. Diese Temperatursensoren dienen dazu die Temperatur der Flüssigkeit, nicht nur im Bereich der Drucksensoren zu messen sondern über einen gesamten Bereich der Flüssigkeit. Dazu können eine Vielzahl von Temperatursensoren über die Länge des Verbindungsschlauchs verteilt so angeordnet sein, dass sie die Temperatur der Flüssigkeit über den Bereich des Verbindungsschlauchs verteilt messen. Dadurch können lokale thermische Einflüsse auf die Flüssigkeit, beispielsweise einer lokalen Wärmequelle, welche von beiden Enden des Verbindungsschlauchs so weit entfernt ist, dass die Temperatursensoren bei den Drucksensoren diese nicht in Form einer Temperaturänderung der Flüssigkeit erkennbar machen, bei der Bestimmung der relativen Höhe mitberücksichtigt werden.

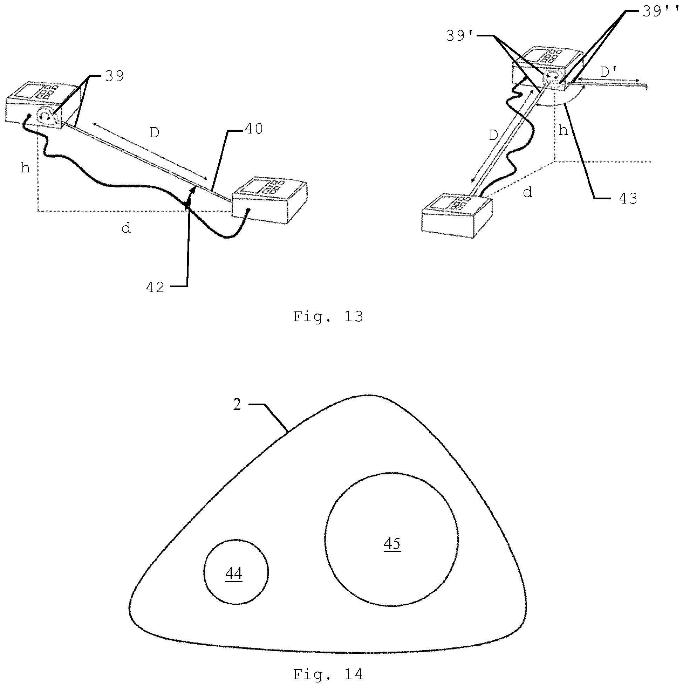

Dasselbe Problem lokaler thermischer Einflüsse auf die Flüssigkeit betreffend kann der Verbindungsschlauch zwei Schlauchkammern (44, 45) aufweisen wie in Figur 14 schematisch in einem Verbindungsschlauchquerschnitt dargestellt. Dabei sind die zwei Schlauchkammern so voneinander getrennt und aneinander anliegend angeordnet, dass zwischen den Medien, welche in den Schlauchkammern sind ein Wärmeaustausch stattfindet. Die eine Schlauchkammer (44), ist mit der die Drucksensoren verbindenden Flüssigkeit gefüllt und die andere Schlauchkammer (45) stellt einen Bereich bzw. ein Volumen bereit zur Zirkulation von einem weiteren Medium, beispielsweise eines Luft- oder Gasstromes oder einer Kühlflüssigkeit. Ein Luftstrom könnte beispielsweise über mögliche Kühlventilatoren der Hardware an den Enden des Schlauches bereitgestellt werden. Durch den Wärmeaustausch zwischen den Medien in den Schlauchkammern werden lokale thermische Einflüsse auf die die Drucksensoren verbindende Flüssigkeit, beispielsweise von einer lokalen Wärmequelle, minimiert. Der Wärmeaustausch mit einem zirkulierenden Medium erzielt dabei einen temperaturstabilisierenden Effekt auf die die Drucksensoren verbindende Flüssigkeit. Der Durchmesser der Schlauchkammer, welche mit der die Drucksensoren verbindenden Flüssigkeit gefüllt ist, ist idealerweise im Durchmesser kleiner als die andere Schlauchkammer wie beispielhaft in Figur 14 gezeigt. Beispielsweise kann der kleinere Durchmesser 2.5 bis 3 mm und der grössere Durchmesser um die 7 mm betragen.

Ebenfalls einen temperaturstabilisierenden Effekt kann die richtige Farbwahl des Verbindungsschlauchs haben. Beispielsweise zeigen gelbe oder weisse Verbindungsschläuche eine die die Drucksensoren verbindende Flüssigkeit betreffend temperaturstabilisierende Wirkung.

Der Prozessor kann vorteilhafterweise eine Kalibrationsfunktionalität aufweisen. Dabei ermöglicht die Kalibrationsfunktionalität jederzeit eine einfache (Re)kalibrierung der Vorrichtung. Bei der (Re)kalibrierung wird die Kalibrationsrelation bestimmt. Die Bestimmung der Kalibrationsrelation basiert dabei auf der Positionierung der beiden Enden des Verbindungsschlauchs in definiertem Abstand in Gravitationsrichtung zueinander. Diese definierte relative Höhe kann der gemessenen Druckdifferenz zugeordnet werden. Basierend auf mindestens einer solchen Zuordnung von Druckdifferenz zu definierter relativer Höhe kann dann die Kalibrationsrelation durch den Prozessor ermittelt werden.

Wie bereits in Figur 2 gezeigt können gemäss einer weiteren möglichen Ausführungsform der Vorrichtung 1 einem Drucksensor mehrere Referenzpunkte 8, 8', 8", 8‴, 8ʺʺ, 8‴ʺ mit einer fixen Positionsrelation zugeordnet werden. Dies kann beispielweise realisiert werden indem ein Gehäuse 7 die Positionsrelation mehrerer Referenzpunkte zu dem jeweiligen Drucksensor fixiert. Idealerweise sind dann das Verbindungsschlauchende und der Drucksensor im Gehäuse untergebracht und die Referenzpunkte befinden sich in definierter und fixer Positionsrelation zum Drucksensor am Gehäuse. Dabei kann jeder Referenzpunkt ein Punkt einer Gehäuseaussenfläche sein oder in definiertem Masse dieser zugeordnet sein, wobei die jeweilige Gehäusefläche beispielsweise als Auflagefläche dient. Somit könnten bei einem würfelförmigen Gehäuse jede der sechs Hauptgehäuseflächen einen Referenzpunkt 8, 8', 8", 8‴, 8ʺʺ, 8‴ʺ aufweisen. Der Prozessor bestimmt dann basierend auf den von den zwei Drucksensoren gemessenen hydrostatischen Drücken eine relative Höhe oder Distanz in Gravitationsrichtung zwischen einem der Referenzpunkte die dem Drucksensor am einen Ende des Verbindungsschlauches zugeordnet sind und einem der Referenzpunkte die dem Drucksensor am anderen dem einen Ende gegenüberliegenden Ende zugeordnet sind. Die Bestimmung der relativen Höhe oder Distanz in Gravitationsrichtung basiert dabei auf der Ermittlung einer Differenz zwischen den zwei gemessenen hydrostatischen Drücken, auf der definierten und fixen Positionsrelation der Referenzpunkte zu den zwei Drucksensoren und somit auch auf der vertikalen Distanz bzw. Distanz in Gravitationsrichtung der Referenzpunkte zu dem jeweiligen Drucksensor.

In einer vorteilhaften Ausführungsform der Vorrichtung 1 kann diese an jedem Ende des Verbindungsschlauches ein Lagemessmodul 9 aufweisen. Im einfachsten Fall kann das Lagemessmodul 9 einen Beschleunigungs-/Neigungssensor aufweisen. Vorteilhafterweise ist das Lagemessmodul ein 3D Lagemessmodul und weist dabei mindestens drei Beschleunigungssensoren auf, welche eine Beschleunigung in drei senkrecht zueinanderstehende Richtungen misst. Basierend auf diesen gemessenen Beschleunigungen kann eine Neigung des entsprechenden Verbindungsschlauchendes relativ zur Gravitationsrichtung, insbesondere automatisch, bestimmt werden. Die, basierend darauf, bestimmte Lage eines Drucksensors bezieht sich dann auf die räumliche Lage des Drucksensors relativ zu einem Referenzpunkt. Basierend auf der so bestimmten Lage der Verbindungsschlauchenden können vom Prozessor automatisch zwei Referenzpunkte bestimmt werden zwischen denen die relative Höhe h bestimmt wird, wie in Figur 3a beispielhaft gezeigt.

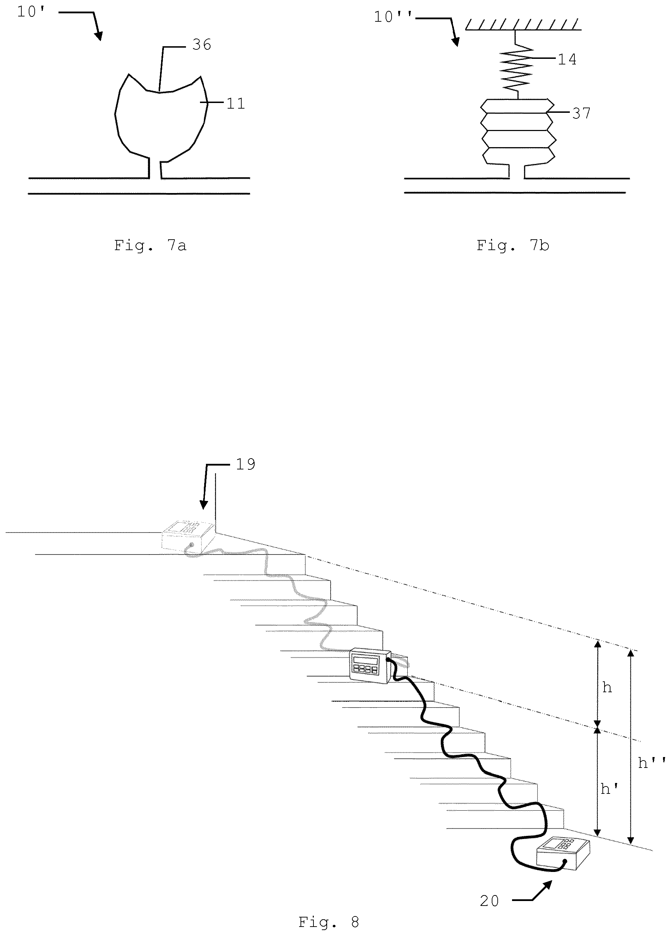

In einer Ausführungsform der Vorrichtung 1 kann diese ein Druckausgleichsgefäss 10 an einem Ende des Verbindungsschlauchs aufweisen, wie schematisch in Figur 2 gezeigt. Dieses Druckausgleichsgefäss regelt die Einstellung und die Aufrechterhaltung eines Basisdrucks der Flüssigkeit im Verbindungsschlauch. Die Einstellung dieses Basisdrucks erfüllt eine wichtige Aufgabe bei beispielsweise der Kalibration oder Re-kalibration der Vorrichtung und ermöglicht eine Anpassung der auftretenden hydrostatischen Drücke an den sensitiven Bereich der beiden Drucksensoren. Des Weiteren ermöglicht das Druckausgleichsgefäss eine Begrenzung eines Über- bzw. Unterdrucks im Verbindungsschlauch gegenüber einem äusseren atmosphärischen Luftdruck. Dadurch kann die Vorrichtung vor möglichen Beschädigungen beispielsweise der Sensoren, des Verbindungsschlauches usw. geschützt werden. Zudem ist dadurch ein Eindringen von Luft wegen potentiellen Undichtigkeitsstellen des hydrostatischen Systems unwahrscheinlich, da der hydrostatische Innendruck laufend dem Aussendruck angeglichen wird, dies zumindest an einem Ende des Verbindungsschlauchs. Schematische Darstellungen möglicher Ausführungsformen 10', 10'' solcher Druckausgleichsgefässe sind in Figur 7a und 7b gezeigt. Die rein beispielhafte Vorrichtung in Figur 7a weist ein mit der Flüssigkeit des Verbindungsschlauches gefülltes Reservoir 11 mit einer Druckausgleichsmembran 36 auf. Diese Vorrichtung ist dazu geeignet den hydrostatischen Druck in dem Verbindungsschlauch dem äusseren atmosphärischen Luftdruck anzugleichen. Die beispielhafte Vorrichtung wie schematisch in Figur 7b gezeigt weist einen Balg 37 und einen Federkörper 14 zur Über- oder Unterdruckeinstellung des hydrostatischen Drucks in dem Verbindungsschlauch auf. Das eine Ende Federkörpers ist mit dem Balg verbunden und das andere Ende des Federkörpers ist beispielsweise mit dem starren Gehäuse verbunden. Ein Ende des Verbindungsschlauches kann auch ein Entlüftungsventil 15 aufweisen. Dieses Entlüftungsventil ermöglicht die Beseitigung von Lufteinschlüssen im Verbindungsschlauch. Dadurch kann die Messgenauigkeit aufrechterhalten werden und im Falle, dass Luft in den Verbindungsschlauch eindringen sollte diese im Rahmen einer Neukalibration wieder entfernt werden.

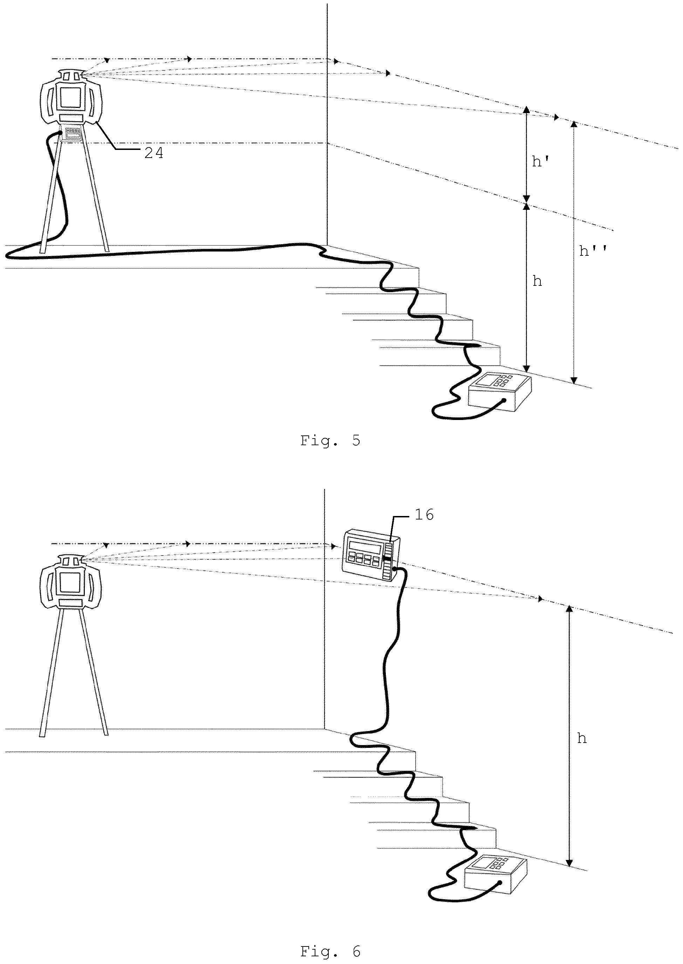

In einer weiteren spezifischen Ausführungsform kann die Vorrichtung 1 an einem Ende des Verbindungsschlauches einen optischen ortsauflösenden Detektor 16 (OAD) aufweisen, wie in Figur 3b beispielhaft gezeigt. Mögliche optische und räumlich auflösende Detektoren können beispielsweise resistive positionsempfindliche Halbleiterdioden mit grosser Messgeschwindigkeit sein (PSD = Position Sensitive Detector). Detektoren mit diskreter Ortsauflösung können pixel-basierte flächige oder linienförmige Sensoren (Zeilensensoren, Dioden Arrays), Charge Coupled Device (CCD) basierte Detektoren oder CMOS-Kameras sein. Der optische OAD 16 ist dabei so am Ende des Verbindungsschlauches angebracht, dass er eine fixe Positionsrelation zu dem entsprechenden Drucksensor 4/4' aufweist. Der optische OAD 16 weist eine Datenverbindung zu dem Prozessor auf und ist dazu konfiguriert optische Strahlung 17 positionssensitiv zu detektieren. Das bedeutet, dass die Position 18, an welcher optische Strahlung vom OAD detektiert wird in Bezug auf die fixe definierte Position des Detektors ermittelt werden kann. Da der OAD eine fixe und definierte Positionsrelation zu dem entsprechenden Drucksensor hat, kann auch die Position 18 an welcher optische Strahlung vom OAD detektiert wird in Bezug auf die Position des Drucksensors ermittelt werden. Die Position an welcher der OAD optische Strahlung detektiert kann auch als Bereich in welchem optische Strahlung detektiert wird verstanden werden. Dieser Bereich weist dann eine entsprechende Vielzahl an Positionen auf an denen optische Strahlung detektiert wird. Basierend auf der Position 18 an welcher die optische Strahlung vom OAD detektiert wird oder basierend auf dem Bereich in welchem optische Strahlung detektiert wird kann ein OAD-Punkt, beispielsweise der Schwerpunkt eines Laserstrahls eines Richtlasers (Pipe Laser), ermittelt werden wobei eine Distanz in Gravitationsrichtung zwischen dem Drucksensor und dem OAD-Punkt als OAD-Höhe bestimmbar ist. Somit ist es dem Prozessor möglich den OAD-Punkt als Referenzpunkt zu definieren und basierend darauf bzw. basierend auf der OAD-Höhe die relative Höhe h zu einem anderen Referenzpunkt welcher dem Drucksensor am anderen Ende des Verbindungsschlauchs zugeordnet ist zu bestimmen, wie beispielhaft in Figur 3c gezeigt. Die optische Strahlung, welche vom OAD detektiert wird kann beispielsweise Referenzstrahlung sein, welche von einem Rotationslaser ausgesendet wird um eine Referenzhöhe zu markieren. Basierend auf der so definierten Referenzhöhe kann eine relative Höhe zu einem weiteren Referenzpunkt ermittelt werden, wie beispielhaft in Figur 6 gezeigt.

Gemäss einer weiteren Ausführungsform der Vorrichtung 1 kann diese an einem oder an beiden Enden des Verbindungsschlauchs ein Display 12 und/oder eine Eingabetastatur mit Bedienfeldern 13 aufweisen. Das Display und/oder die Eingabetastatur weisen eine Datenverbindung zum Prozessor auf. Über das Display können Informationen betreffend die gemessenen Sensorwerte und somit auch betreffend die ermittelte relative Höhe h angezeigt werden. Solche Informationen können beispielsweise die gemessene Temperatur oder auch die gemessenen Drücke sein. Ebenso könnten Informationen angezeigt werden, welche auf die aktuell verwendeten Referenzpunkte schliessen lassen basierend auf welchen die relative Höhe h bestimmt wird. Das Display kann auch ein Touchscreen sein und zur Befehlseingabe durch einen Benutzer dienen. Beispielsweise kann das Display unterschiedliche Bedienfelder 13 aufweisen zur Navigation in einer mehrschichtigen "Menü-Struktur". Die Bedienfelder 13 können beispielsweise den Messmodus betreffen, die Abfrage von Systeminformationen ermöglichen oder auch ein Sensorkalibrations-Untermenü eröffnen. Des Weiteren kann über das Display ein die Messung oder Kalibration betreffender Status ausgegeben werden, welcher den Fortschritt der Messung oder der Kalibration wiedergibt. Ebenso können die Bedienfelder 13 zur Eingabe von direkten Befehlen/Anweisungen an den Prozessor dienen. Diese Bedienfelder 13 können auch in Form von Druckknöpfen am jeweiligen Schlauchende angeordnet sein. Solche Anweisungen können beispielsweise das Setzen eines Nullpunkts betreffen. Dabei kann die Position des einen Endes des Verbindungsschlauches beispielsweise mittels Betätigung des entsprechenden Bedienfeldes als Nullpunkt definiert werden, von welchem aus die relative Höhe zu einem Referenzpunkt der dem Drucksensor am anderen Ende des Verbindungsschlauchs zugeordnet ist bestimmt wird; Eine weitere Anweisung könnte die Wahl eines Messmodus' betreffen bei welchem die Position des einen Endes des Verbindungsschlauches als Nullpunkt definiert wird von welchem aus die relative Höhe zu einem Referenzpunkt der dem Drucksensor am anderen Ende des Verbindungsschlauchs zugeordnet ist bestimmt wird, wobei das andere Ende des Verbindungsschlauches nacheinander an einer ersten 19 und zweiten 20 Position positioniert wird und dann basierend auf der so bestimmten ersten und zweiten relativen Höhe h, h' eine relative Gesamthöhe h'' bestimmt wird, wie in Figur 8 gezeigt. Weitere Anweisungen können beispielsweise das Speichern eines Sensormesswertes oder einer bestimmten relativen Höhe h betreffen oder das Erstellen einer Notiz zu einer ermittelten relativen Höhe h. Ebenso könnte eine Anweisung zur Folge haben, dass Sensorwerte oder bestimmte relative Höhen h dann abgespeichert werden, wenn die Sensoren über einen definierten Zeitraum Messwerte ausgeben, welche sich innerhalb einer bestimmten Toleranzbandbreite befinden. Einschwingvorgänge können so automatisch ausgeblendet werden. Das Erreichen stationärer Messzustände als vordefiniertes Kriterium kann dann beispielsweise durch Ausgabe eines insbesondere akustischen Signals über den Signalgeber signalisiert werden. Variierende Messwerte zu der zu bestimmenden relativen Höhe, werden hauptsächlich durch ein Schwingen des Verbindungsschlauches erzeugt. Sie variieren dann periodisch mit abnehmender Fehleramplitude. Bei ungünstiger Verbindungsschlauchlage können auch 10 Sekunden verstreichen bis ein stationärer Messzustand erreicht ist und somit eine genaue Ablesung der Höhe möglich wird. Mit einfacher Algorithmik kann diese Einschwingzeit massiv verkürzt werden, beispielsweise mittels einer Bestimmung der Periodenzeit und eines gleitenden Mittelwerts über ein ganzzahliges Vielfaches einer Periodendauer. Bereits nach wenigen Sekunden kann dadurch eine genaue relative Höhe ermittelt werden. Das beschriebene Display 12 oder der beschriebene Touchscreen können ebenfalls Teil eines mobilen Endgerätes oder Computers sein. Dabei muss das mobile Endgerät oder der mobile Computer nicht an der Vorrichtung angeordnet sein, sondern kann losgelöst davon verwendet werden. Ebenso können die beiden Verbindungsschlauchenden eine Vorrichtung/Halterung aufweisen welche dazu dient das mobile Endgerät oder den mobilen Computer wieder abnehmbar an den Verbindungsschlauchenden zu fixieren. Das mobile Endgerät oder der mobile Computer weist dann eine Datenverbindung (beispielsweise, kabelgebunden oder wireless via Funk, Bluetooth, WiFi) zu dem Prozessor der Vorrichtung auf. Damit beide Enden des Verbindungsschlauchs einfach von Hand getragen werden können, scheint es sehr vorteilhaft, dass der mobile Computer, insbesondere das Tablet oder Mobile Phone, an dem einen Ende des Verbindungsschlauchs, beispielswiese über einen robusten Tragwinkel als Schnappvorrichtung fixiert werden kann. Tablets oder Smartphones als mobile Endgeräte haben neben der Vernetztheit zu anderen Endgeräten, zum Internet oder zu Cloud-Computing Systemen den Vorteil eines grossen Displays, einer integralen Tastatur und einer hochauflösenden Kamera. Diese Hilfsmittel vereinfachen die Bedienung und den Arbeitsablauf unter Zuhilfenahme von entsprechend unterstützenden Applikationen. Zudem lassen sich zu den Absteck- oder Messdaten Attribute wie Fotos und/oder GPS-Koordinaten hinterlegen. Des Weiteren können auf dem Display grafische Informationen bereitgestellt werden wie die Anzeige einer Libelle um die Ausrichtung des Referenzpunktes zur Lotrichtung zu visualisieren, oder einen Lageplan mit den abzusteckenden oder kontrollierenden Messpunkten oder Messhöhen anzuzeigen.

Wie beispielhaft in Figur 4a gezeigt, kann in einer spezifischen Ausführungsform ein Ende des Verbindungsschlauchs ein optisches Distanzmessgerät 21 mit einem Neigungssensor aufweisen. Dieses optische Distanzmessgerät 21 ist so an einem Ende des Verbindungsschlauchs angeordnet, dass es eine fixe und definierte Positions- und Lagerelation zu dem entsprechenden Drucksensor hat und eine Datenverbindung mit dem Prozessor aufweist. Ein solches optisches Distanzmessgerät 21 misst mittels optischer Distanzmessstrahlung 22 absolute Distanzen zu einem angezielten Punkt/Zielpunkt 23 und kann beispielsweise ein Laserdistanzmesser sein zur Messung absoluter Distanzen mittels Laserstrahlung. Der Prozessor kann dann mittels des Neigungssensors die Neigung der Distanzmessstrahlung bestimmen. Durch die fixe und definierte Position und Lage des optischen Distanzmessgeräts 21 ist es möglich, basierend auf der mittels des Neigungssensors gemessenen Neigung, und der zu einem angezielten Punkt 23 gemessenen Distanz die relative Höhe h' zwischen dem Drucksensor und dem angezielten Punkt zu bestimmen. Dabei wird die optisch gemessene Distanz/Schrägdistanz mittels des elektronischen Lage- oder Neigungssensors in eine zur Lotrichtung parallele Höhendifferenz umgerechnet. Der elektronische Lage- oder Neigungssensor kann dabei von dem entsprechenden Verbindungsschlauchende oder vom optischen Distanzmessgerät selber bereitgestellt werden. Basierend auf der so bestimmten relativen Höhe h' und der bestimmten relativen Höhe h, kann mit der Vorrichtung eine relative Höhe h'' zwischen einem Referenzpunkt welcher dem Drucksensor am anderen Ende des Verbindungsschlauchs zugeordnet ist und dem vom optischen Distanzmessgerät angezielten und vermessenen Punkt 23 ermittelt werden. Der Neigungssensor kann auch ein Beschleunigungssensor eines Lagemessmoduls 9 sein.

Wie beispielhaft in Figur 4b gezeigt, kann in einer weiteren spezifischen Ausführungsform die Vorrichtung 1 an einem oder auch an beiden Enden eine Kopplungsvorrichtung aufweisen. Dabei ist diese Kopplungsvorrichtung dazu ausgelegt weitere Messgeräte an das jeweilige Verbindungsschlauchende der Vorrichtung 1 an- und wieder abzukoppeln. Weitere Messgeräte können beispielsweise optische Distanzmesser, Lasertracker, Laserscanner, Totalstationen, Theodolite oder Nivelliergeräte im Allgemeinen sein, aber auch Messlehren, welche ein definiertes Längenmass verkörpern oder auch wie hier beschriebene Vorrichtungen 1 zur Bestimmung relativer Höhen h. Die Kopplungsvorrichtung weist dabei eine Datenverbindung mit dem Prozessor der Vorrichtung 1 auf (kabelgebunden oder wireless), sodass diese einen angekoppelten oder abgekoppelten Zustand erkennt und diesen Zustand als Kopplungsstatus an den Prozessor signalisiert. Beispielsweise kann diese Erkennung des Kopplungsstatus' über einen einfachen elektrischen, magnetischen oder optischen Kontakt ermöglicht werden. Zusätzlich weist dann die Vorrichtung an mindestens einem Ende des Verbindungsschlauches eine elektronische Identifikationsmarke auf. Diese elektronische Identifikationsmarke kann ein radio frequency identification (RFID) "Tag" sein oder ein beliebiger anderer "Tag", welcher gemäss dem near field communication (NFC) Übertragungsstandard verwendet werden kann. Des Weiteren weist die Vorrichtung dann ein Lesegerät auf, welches elektronische Identifikationsmarken erkennen und auswerten/auslesen kann. Dieses elektronische Identifikationsmarken-Lesegerät weist eine Datenverbindung mit dem Prozessor der Vorrichtung auf (kabelgebunden oder wireless), sodass das Lesegerät ein Erkennen einer elektronischen Identifikationsmarke an den Prozessor signalisiert und auch die ausgelesene Information an den Prozessor sendet. Der Prozessor ist dann so konfiguriert, dass dieser basierend auf dem Kopplungsstatus und basierend auf dem Informationsaustausch zwischen Prozessor und Lesegerät eine relative Höhe h, h', h'' bestimmt. Beispielsweise kann auf diese Weise ein Verbindungsschlauchende der Vorrichtung an eine Gehäuseseite eines aufgestellten Rotationslasers 24 gekoppelt werden, wie beispielhaft in Figur 5 gezeigt. Der angekoppelte Status wird als solcher von der Kopplungsvorrichtung erkannt und an den Prozessor der Vorrichtung 1 signalisiert. Gleichzeitig erkennt das Lesegerät die elektronische Identifikationsmarke des Rotationslasers, signalisiert dies an den Prozessor und sendet auch die mit der Identifikationsmarke verbundene Information an den Prozessor. Prozessor kennt dann den angekoppelten Zustand und identifiziert basierend auf der Information welche mit der elektronischen Identifikationsmarke verbunden ist als angekoppeltes Messgerät, einen Rotationslaser 24. Basierend auf dieser Information bestimmt dann die Vorrichtung eine relative Höhe h zwischen einem Referenzpunkt der Vorrichtung 1 und einem Referenzpunkt, welcher dem angekoppelten Rotationslaser 24 zugeordnet ist. Informationen zum Referenzpunkt, welcher dem Rotationslaser 24 zugeordnet ist, sind basierend auf der definierten und fixen Positionsrelation ebendieses Referenzpunkts zu der Kopplungsvorrichtung des Rotationslasers in einem Speichermedium der Hardware der Vorrichtung hinterlegt und vom Prozessor abrufbar. Ein weiteres Beispiel wäre das Zusammenkoppeln von zwei gleichen Vorrichtungen 1 wie sie hier beschrieben sind zur Bestimmung von relativen Höhen h, h', h'' zwischen zwei Punkten, wie in Figur 4b gezeigt. Durch das Zusammenkoppeln würde der Prozessor in Analogie zum vorherigen Beispiel das angekoppelte Messgerät als Vorrichtung zur Bestimmung von relativen Höhen identifizieren und basierend darauf zusätzlich eine relative Höhe h'' zwischen einem Referenzpunkt, welcher dem Drucksensor an dem einen nicht gekoppelten (Kopplungsstatus abgekoppelt) Verbindungsschlauchende der einen Vorrichtung zugeordnet ist und einem Referenzpunkt, welcher dem Drucksensor an dem einen nicht gekoppelten (Kopplungsstatus abgekoppelt) Verbindungsschlauchende der anderen/angekoppelten Vorrichtung zugeordnet ist, bestimmt.

Gemäss einer weiteren Ausführungsform, wie beispielhaft in Figur 9 gezeigt, kann die Vorrichtung an einem Ende des Verbindungsschlauchs einen Reflektor 25 mit einem Referenzpunkt aufweisen. Dabei hat dieser Reflektor 25 eine fixe und definierte Positionsrelation zu dem Drucksensor. Der Reflektor kann ein Prisma basierter Retroreflektor, ein Hohlreflektor, ein 360 Grad Reflektor oder eine Zielmarke sein. Der Reflektor ist dazu ausgelegt optische Referenz- oder Messstrahlung eines optischen Vermessungsgeräts so zu reflektieren, dass das Vermessungsgerät den Reflektor und somit das Ende des Verbindungsschlauches einmessen kann. Ein beispielhaftes optisches Vermessungsgerät ist eine Totalstation, ein Theodolit oder ein Tachymeter. Ein solches Vermessungsgerät zielt mittels einer automatischen Anzielund/oder Zielverfolgungseinheit laufend auf das Zentrum des Reflektors und erfasst dabei die Positionskoordinaten des Reflektors am Ende des Verbindungsschlauchs. Aufgrund der fixen und definierten Positionsrelation des Reflektors zu dem Drucksensor kann die Vorrichtung eine relative Höhe basierend auf der vom Vermessungsgerät eingemessenen Höhe des Reflektors zwischen dem Referenzpunkt des Reflektors und einem dem anderen Drucksensor zugeordneten Referenzpunkt bestimmen.

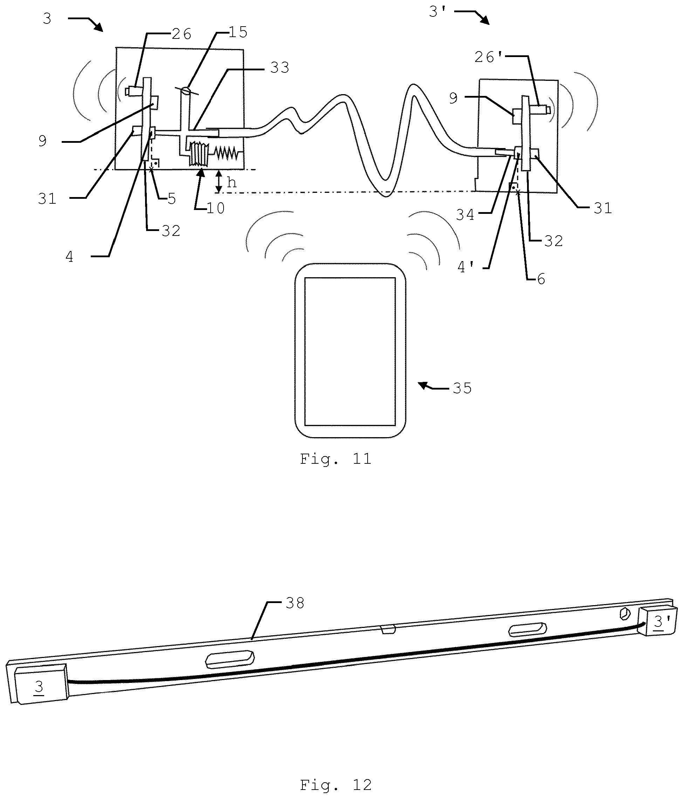

Figur 11 zeigt die Vorrichtung gemäss einer weiteren Ausführungsform. An beiden Schlauchenden 3, 3' befindet sich jeweils ein Elektronikboard (32), welches ein Wireless-Modul (26, 26'), ein Lagemessmodul (9), einen Temperatursensor (31) und einen Drucksensor (4, 4') aufweist. Die beiden Enden 3,3' sind über ein erstes Verbindungsstück (33) an dem einen Ende des Verbindungsschlauchs, und ein zweites Verbindungsstück (34) an dem anderen Ende des Verbindungsschlauchs miteinander mechanisch verbunden. Zudem sind die beiden Enden 3, 3' elektronisch über eine Datenverbindung zeitecht verbunden, um eine genaue zeitliche Synchronisation der jeweiligen Druckund Temperatur-Messungen in den beiden Endgeräten 3 und 3' zu gewährleisten. Im Inneren eines ersten Gehäuses 7 stehen in starrer Verbindung das erste Verbindungsstück (33), der Verbindungsschlauch 2, der Drucksensor, ein Druckausgleichsgefäss (10) und ein Entlüftungsventil (15), und im Inneren eines zweiten Gehäuses 7 stehen in starrer Verbindung das zweite Verbindungsstück (34), der Verbindungsschlauch 2 und der Drucksensor. Des Weiteren kann die erfinderische Vorrichtung von einem Tablet-Computer oder einem Smartphone (35) drahtlos fernbedient, die Datenverbindung zur Vorrichtung erfolgt jeweils über die Wireless-Module (26, 26'). Der Tablet-Computer oder das Smartphone (35) können dabei handgetragen oder aufgesteckt an einem der Gehäuse 7 sein.

Gemäss einer weiteren spezifischen Ausführungsform der Vorrichtung kann das eine Ende des Verbindungsschlauchs fest an der sich um eine Drehachse drehbar gelagerten Verbindungsschlauchaufnahme einer Schlauchaufrollvorrichtung angebracht sein. Der Verbindungsschlauch kann dann mit dem anderen freien Ende auf die Verbindungsschlauchaufnahme der Schlauchaufrollvorrichtung aufgerollt und von dieser wieder abgerollt werden. Dies erlaubt insbesondere die Verwendung langer Verbindungsschläuche bei gleichzeitig kompaktem Aufbau der Vorrichtung. Dabei ist die kompakte Bauweise der Verbindungsschlauchenden vorteilhaft, da diese das Anbringen eines Verbindungsschlauchendes an eine drehbare Verbindungsschlauchaufnahme ermöglichen.

Gemäss einer weiteren Ausführungsform, wie beispielhaft in Figur 12 gezeigt, können die Enden des Verbindungsschlauchs 3, 3' in definiertem Abstand und bestimmter Positionsrelation zueinander starr miteinander verbunden sein, beispielsweise durch Anbringen an einer starren Latte, wobei das eine Ende des Verbindungsschlauchs 3 in der Nähe des einen Endes der Latte und das andere Ende des Verbindungsschlauchs 3' in der Nähe des anderen Endes der Latte fixiert sind. Basierend auf den gemessenen hydrostatischen Drücken an den Enden des Verbindungsschlauchs, kann die relative Höhe zwischen einem dem einen Ende des Verbindungsschlauchs zugeordneten Referenzpunkt und einem dem anderen Ende des Verbindungsschlauchs zugeordneten Referenzpunkt bestimmt werden. Basierend auf dem fixen und bekannten Abstand zwischen den beiden Referenzpunkten kann dann mittels der bestimmten relativen Höhe eine Neigung der starren Latte ermittelt werden. In einer einfachen möglichen Ausführungsform kann eine solche Vorrichtung auch lediglich dazu konfiguriert sein eine gleiche Höhe der beiden Enden des Verbindungsschlauchs zu identifizieren und anzuzeigen oder zu signalisieren, beispielsweise im Sinne einer digitalen Richtwaage oder Maurerwaage. Des Weiteren kann der Prozessor dazu konfiguriert sein ermittelte Neigungswerte über das Display (12) und/oder einen Tablet-Computer oder ein Smartphone anzuzeigen. Eine solche Vorrichtung kann dann eine Doppelfunktion als Richtwaage oder Maurerwaage und als Neigungsmesswerkzeug aufweisen. Neigungsmesswerkzeuge werden unter anderem im Bauwesen im Nassbereich beim Rohre verlegen oder bei Geländearbeiten mit Wiesenborden, Zufahrtsstrassen, Vorplätzen, wo ein bestimmtes Gefälle realisiert werden soll, verwendet.

Gemäss einer spezifischen Ausführungsform kann die Vorrichtung auch dazu ausgestaltet sein eine bestimmte relative Höhe h zu verwenden um beispielsweise Geländeprofile zu messen und/oder abzustecken. Dazu kann die Vorrichtung an einem Ende des Verbindungsschlauchs ein ausziehbares elektronisches Rollmessband mit einem Distanzgeber aufweisen wie in Figur 13 (39) beispielhaft gezeigt. Das Messband 40 selbst kann beispielsweise eine Schnur, eine Kordel, ein Band oder auch eine Kette sein und ist zurückziehbar in einem Gehäuse zu einer Rolle aufgerollt angebracht. Der Distanzgeber ist dazu konfiguriert in Abhängigkeit des Auszieh- bzw. Abrollgrades des Messbandes eine Distanz D zwischen einem Referenzpunkt des einen Endes des Verbindungsschlauches und dem aus dem Gehäuse ausgezogenen/abgerollten Ende des Messbandes zu bestimmen. Der Distanzgeber kann beispielsweise eine optische Sensoreinheit sein, welche eine auf dem Messband vorhandene Skala oder Prägung optisch ausliest. Ebenso kann eine optische Sensoreinheit beispielsweise einen Distanzmessstrahl verwenden um den sich in Abhängigkeit des Ausziehgrades/Abrollgrades ändernden Radius/Durchmesser der Messbandrolle aufzuzeichnen, wobei die Distanz basierend darauf ermittelt wird. Der Distanzgeber kann auch eine elektro-mechanische Sensoreinheit sein, welche beispielsweise basierend auf der Drehbewegung einer am Messband anliegenden Rolle oder basierend auf der Drehbewegung der Rolle auf welcher das Messband aufgerollt ist eine entsprechende Distanz ermittelt. Das elektronische Rollmessband weist zwei Enden auf wobei das eine Ende fest im Gehäuse angebracht ist und das andere ausziehbar ist. Das ausziehbare Ende kann vorteilhafterweise an dem anderen dem einen Ende gegenüberliegenden Ende des Verbindungsschlauchs angebracht sein. Dadurch ist es möglich mit der Vorrichtung automatisch eine horizontale Distanz d zwischen den beiden Verbindungsschlauchenden zu bestimmen. Ebenso kann automatisch basierend auf der abgesteckten Distanz D und der bestimmten relativen Höhe h ein Steigungs- oder Neigungswinkel 42 ermittelt werden.

In einer weiteren vorteilhaften Ausführungsform kann die Vorrichtung auch dazu ausgestaltet sein, um 3D-Punkte beispielweise auf einer Geländefläche abzustecken oder zu Messen. Dazu kann die Vorrichtung an einem Ende des Verbindungsschlauchs zwei ausziehbare elektronische Rollmessbänder 39', 39'' aufweisen. Dabei sind die Messbänder je in einem eigenen Gehäuse zurückziehbar zu einer Rolle aufgerollt, wobei die beiden Gehäuse über eine gemeinsame Drehachse zu einer Einheit miteinander verbunden sind und wobei diese Einheit einen Winkelgeber aufweist. Der Winkelgeber ist dazu konfiguriert einen Winkelmesswert für einen Winkel 43 zu bestimmen, welcher durch die beiden entsprechend ausgezogenen/abgerollten Messbänder D, D' begrenzt wird. Dabei bestimmt der Winkelgeber den Winkelmesswert basierend auf der um die gemeinsame Drehachse ausgeführten Drehbewegung der beiden Gehäuse relativ zueinander.

Es versteht sich, dass diese dargestellten Figuren nur mögliche Ausführungsbeispiele schematisch darstellen. Die verschiedenen Ansätze können erfindungsgemäss ebenso miteinander sowie mit Messkonzepten oder Messgeräten des Stands der Technik kombiniert werden.

## Patentansprüche

1. Vorrichtung (1) zur Bestimmung von relativen Höhen (h) zwischen zwei Punkten, mit
• einen mit einer Flüssigkeit gefüllten Verbindungsschlauch (2) mit zwei sich gegenüberliegenden Enden (3, 3'),
• einen ersten und einen zweiten Drucksensor (4, 4'), angeordnet an den sich gegenüberliegenden Enden des Verbindungsschlauchs, wobei die Drucksensoren über die Flüssigkeit miteinander verbunden sind und die Flüssigkeit von dem Verbindungsschlauch gegen Aussen gasdicht abgeschlossen wird und wobei der erste Drucksensor dazu konfiguriert ist einen hydrostatischen Druck der Flüssigkeit an dem einen Ende des Verbindungsschlauchs in der Flüssigkeit zu messen und der zweite Drucksensor dazu konfiguriert ist einen hydrostatischen Druck der Flüssigkeit an dem anderen dem einen Ende gegenüberliegenden Ende des Verbindungsschlauchs in der Flüssigkeit zu messen, und
• einen Prozessor, welcher dazu konfiguriert ist, eine relative Höhe zwischen einem ersten Referenzpunkt (5, 5') mit einer fixen Positionsrelation zu dem ersten Drucksensor (4) und einem zweiten Referenzpunkt (6, 6') mit einer fixen Positionsrelation zu dem zweiten Drucksensor (4') basierend auf den vom ersten und vom zweiten Drucksensor gemessenen hydrostatischen Drücken zu bestimmen, wobei durch den Prozessor die gemessenen hydrostatischen Drücke einem gleichen gemeinsamen Messzeitpunkt zuordenbar sind und die Bestimmung der relativen Höhe (h) basierend darauf erfolgt,
**gekennzeichnet durch** weitere Drucksensoren (27, 27', 28, 28', 28", 29, 29', 29'', 29‴) an jedem Ende des Verbindungsschlauchs (3, 3'), wobei die Drucksensoren am jeweiligen Ende des Verbindungsschlauchs (3, 3') um einen gemeinsamen Mittelpunkt (30) angeordnet sind und eine fixe Positionsrelation zueinander haben, und
**dadurch, dass** der Prozessor dazu konfiguriert ist
o die relative Höhe (h) basierend auf Mittelwerten der mittels der Drucksensoren am jeweiligen Ende des Verbindungsschlauchs gemessenen Drücke zu bestimmen, und/oder
o eine Lage des jeweiligen Endes des Verbindungsschlauchs in Relation zu einem Referenzpunkt (5, 5', 6, 6') basierend auf den mittels der Drucksensoren am jeweiligen Ende des Verbindungsschlauchs gemessenen Drücken, insbesondere Druckdifferenzen, zu bestimmen und die relative Höhe (h) auch basierend auf der Lage zu bestimmen.

2. Vorrichtung nach Anspruch 1, **gekennzeichnet durch** einen ersten und einen zweiten Temperatursensor, wobei
o jeder der Temperatursensoren einem Drucksensor zugeordnet ist,
o der erste Temperatursensor dazu konfiguriert ist die Temperatur beim ersten Drucksensor, insbesondere in der Flüssigkeit, zu messen,
o der zweite Temperatursensor dazu konfiguriert ist die Temperatur beim zweiten Drucksensor, insbesondere in der Flüssigkeit, zu messen, und
o der Prozessor dazu konfiguriert ist die relative Höhe (h) auch basierend auf den gemessenen Temperaturen zu bestimmen, insbesondere um thermische Einflüsse auf die relative Höhe (h) zu berücksichtigen.

3. Vorrichtung nach einem der Ansprüche 1 bis 2, **gekennzeichnet durch** einen Synchronisator, wobei der Synchronisator dazu konfiguriert ist einen ersten Messzeitpunkt zu welchem der erste Druck- und/oder Temperatursensor misst mit einem zweiten Messzeitpunkt zu welchem der zweite Druck- und/oder Temperatursensor misst zu synchronisieren, wobei der Prozessor dazu konfiguriert ist basierend auf den synchronisierten Messzeitpunkten die gemessenen hydrostatischen Drücke einem gleichen gemeinsamen Messzeitpunkt zuzuordnen.

4. Vorrichtung nach Anspruch 3, **gekennzeichnet durch**
∘ jeweils ein Wireless-Modul (26, 26') an jedem Ende des Verbindungsschlauchs, wobei
∘ die Sensoren mit dem jeweiligen Wireless-Modul verbunden sind, und
∘ die Wireless-Module dazu konfiguriert sind ein Wireless-Triggersignal zu empfangen und zu verarbeiten, und
∘ **dadurch, dass** der Synchronisator dazu konfiguriert ist die Messzeitpunkte basierend auf einem Wireless-Triggersignal zu synchronisieren, sodass die Sensoren Druck und/oder Temperatur synchronisiert basierend auf dem Wireless-Triggersignal messen.

5. Vorrichtung nach einem der Ansprüche 1 bis 4,
**gekennzeichnet durch** weitere Temperatursensoren, und **dadurch, dass**
∘ der Verbindungsschlauch (2) über seine Länge verteilt mehrere Temperaturmessbereiche aufweist,
∘ jedem Temperaturmessbereich zumindest einer der weiteren Temperatursensoren zugeordnet ist,
∘ die weiteren Temperatursensoren dazu konfiguriert sind die Temperatur im zugeordneten Temperaturmessbereich, insbesondere in der Flüssigkeit, zu messen, und
∘ der Prozessor dazu konfiguriert ist die relative Höhe (h) auch basierend auf den in den Temperaturmessbereichen des Verbindungsschlauchs (2) gemessenen Temperaturen zu bestimmen, insbesondere um thermische Einflüsse auf die relative Höhe (h) zu berücksichtigen.

6. Vorrichtung nach einem der Ansprüche 1 bis 5, **dadurch gekennzeichnet, dass** der Verbindungsschlauch (2)
∘ eine erste (44) und eine zweite Schlauchkammer (45) aufweist,
∘ die Schlauchkammern voneinander getrennt sind und aneinander anliegend entlang des Verbindungsschlauches verlaufen,
∘ die erste Schlauchkammer (44) mit der die Drucksensoren verbindenden Flüssigkeit gefüllt ist und die zweite Schlauchkammer (45) einen Zirkulationsbereich für ein darin bewegbares Medium bereitstellt.

7. Vorrichtung nach einem der Ansprüche 1 bis 6, **dadurch gekennzeichnet, dass** einem Drucksensor (4; 4') mehrere Referenzpunkte (8, 8', 8", 8‴, 8ʺʺ, 8‴ʺ) mit einer fixen Positionsrelation zu dem Drucksensor zugeordnet sind.

8. Vorrichtung nach einem der Ansprüche 1 bis 7,
**gekennzeichnet durch** jeweils ein Lagemessmodul (9) an den beiden Enden des Verbindungsschlauchs, wobei die Lagemessmodule mindestens einen Beschleunigungssensor aufweisen und dazu konfiguriert sind die Lage des jeweiligen Drucksensors in Relation zu einem Referenzpunkt mit fixer Positionsrelation zum jeweiligen Drucksensor zu bestimmen und der Prozessor dazu konfiguriert ist die relative Höhe (h) basierend auf der Lage der Drucksensoren zu bestimmen,
und/oder
durch ein Druckausgleichsgefäss (10) an einem Ende des Verbindungsschlauchs, wobei das Druckausgleichsgefäss dazu konfiguriert ist
∘ einen Basisdruck im Verbindungsschlauch einzustellen und konstant zu halten, und/oder
∘ einen Über- bzw. Unterdruck im Verbindungsschlauch gegenüber einem äusseren Luftdruck auszugleichen und/oder zu begrenzen,
insbesondere wobei an beiden Enden des Verbindungsschlauchs die jeweiligen Komponenten in jeweils ein Gehäuse integriert sind, welches zum Handgetragenwerden ausgebildet und konfiguriert ist.

9. Vorrichtung nach einem der Ansprüche 1 bis 8,
**gekennzeichnet durch** einen optischen ortsauflösenden Detektor (OAD) (16) an einem Ende des Verbindungsschlauches wobei der optische OAD (16) eine fixe Positionsrelation zu dem Drucksensor hat und dazu konfiguriert ist optische Referenzstrahlung positionssensitiv an einem OAD-Punkt (18) zu detektieren und wobei der Prozessor dazu konfiguriert ist eine OAD-Höhe zwischen dem Drucksensor und dem OAD-Punkt zu ermitteln und die relative Höhe (h) basierend auf der OAD-Höhe zu bestimmen, insbesondere die relative Höhe (h) zwischen einem Referenzpunkt und dem OAD-Punkt zu bestimmen.

10. Vorrichtung nach einem der Ansprüche 2 bis 9,
**gekennzeichnet durch** ein Display (12) und/oder eine Eingabetastatur mit Bedienfeldern (13) an mindestens einem Ende des Verbindungsschlauchs, wobei der Prozessor dazu konfiguriert ist
∘ am jeweiligen Ende des Verbindungsschlauchs Informationen betreffend die gemessenen Temperaturen und Drücke, insbesondere relative Höhenpositionen der Verbindungsschlauchenden und die relative Höhe, (h) über das Display (12) anzuzeigen und/oder
∘ Anweisungen, die über die Bedienfelder (13) der Eingabetastatur eingegeben werden auszuführen.

11. Vorrichtung nach einem der Ansprüche 1 bis 10, **dadurch gekennzeichnet, dass** der Prozessor dazu konfiguriert ist von einem mobilen Computer mit einem Display (35), insbesondere einem Touchscreen, ferngesteuert zu werden und Informationen betreffend die gemessenen Temperaturen und Drücke, insbesondere relative Höhenpositionen der Verbindungsschlauchenden und die relative Höhe (h) über das Display des mobilen Computers anzuzeigen,
und/oder
**gekennzeichnet durch** eine Halterung an mindestens einem Verbindungsschlauchende, wobei die Halterung dazu ausgelegt ist einen mobilen Computer aufzunehmen und zu fixieren.

12. Vorrichtung nach einem der Ansprüche 1 bis 11, **gekennzeichnet durch** ein optisches Distanzmessgerät (21) mit einem Neigungssensor an einem Ende des Verbindungsschlauchs, wobei das optische Distanzmessgerät (21) eine fixe Positions- und Lagerelation zu dem Drucksensor hat und dazu konfiguriert ist mittels optischer Distanzmessstrahlung (22) absolute Distanzen zu angezielten Punkten (23) zu messen und wobei der Prozessor dazu konfiguriert ist basierend auf der bestimmten relativen Höhe (h) zwischen dem einen ersten und dem einen zweiten Referenzpunkt, einer mittels des Neigungssensors gemessenen Neigung der optischen Distanzmessstrahlung, und der zu einem angezielten Punkt (23) gemessenen Distanz die relative Höhe (h'') zwischen dem einen ersten Referenzpunkt und dem vom optischen Distanzmessgerät angezielten Punkt zu bestimmen.

13. Vorrichtung nach einem der Ansprüche 1 bis 12,
**gekennzeichnet durch**
∘ eine Kopplungsvorrichtung an mindestens einem Ende des Verbindungsschlauchs, wobei die Kopplungsvorrichtung dazu konfiguriert ist weitere Messgeräte an- und wieder abzukoppeln und einen dementsprechend angekoppelten oder abgekoppelten Zustand als Kopplungsstatus dem Prozessor bereitzustellen,
∘ eine elektronische Identifikationsmarke an mindestens einem Ende des Verbindungsschlauchs, und
∘ ein elektronische Identifikationsmarken Lesegerät, wobei der Prozessor dazu konfiguriert ist eine relative Höhe (h, h', h'') auch basierend auf mindestens einer vom Lesegerät gelesenen elektronischen Identifikationsmarke und auf dem Kopplungsstatus zu bestimmen,
und/oder
durch
∘ einen Reflektor (25) an einem Ende des Verbindungsschlauchs, wobei der Reflektor einen Referenzpunkt aufweist der eine fixe Positionsrelation zu dem Drucksensor hat und dazu konfiguriert ist Referenzstrahlung eines Messgeräts zu reflektieren, wobei die Bestimmung der relativen Höhe basierend auf dem Referenzpunkt des Reflektors erfolgt und/oder
∘ einen Signalgeber, wobei der Prozessor mit dem Signalgeber verbunden ist und dazu konfiguriert ist basierend auf einem vordefinierten Kriterium, das die Bestimmung einer relativen Höhe betrifft ein Signal über den Signalgeber auszugeben.

14. Vorrichtung nach einem der Ansprüche 1 bis 13,
**gekennzeichnet durch**
∘ jeweils ein Elektronikboard (32) an den beiden Enden des Verbindungsschlauchs, welches ein Wireless-Modul (26, 26'), ein Lagemessmodul (9), einen Temperatursensor (31) und einen Drucksensor (4, 4') aufweist und miteinander über eine Datenverbindung verbindet,
∘ ein erstes Verbindungsstück (33) an dem einen Ende des Verbindungsschlauchs,
∘ ein zweites Verbindungsstück (34) an dem anderen dem einen Ende gegenüberliegenden Ende des Verbindungsschlauchs, und
∘ einen Tablet-Computer oder ein Smartphone (35)
wobei
∘ das erste Verbindungsstück (33) den Verbindungsschlauch, den Drucksensor, ein Druckausgleichsgefäss (10) und ein Entlüftungsventil (15) starr miteinander verbindet, und
∘ das zweite Verbindungsstück (34), den Verbindungsschlauch und den Drucksensor starr miteinander verbindet,
insbesondere wobei der Verbindungsschlauch jeweils einen Verbindungsbereich des ersten und zweiten Verbindungsstücks überzieht, und wobei
∘ die Wireless-Module (26, 26') und der Tablet-Computer oder das Smartphone (35) eine Datenverbindung untereinander zur Steuerung der Vorrichtung bereitstellen.

15. Vorrichtung nach einem der Ansprüche 1 bis 14, **gekennzeichnet durch** ein erstes ausziehbares elektronisches Rollmessband (39) mit einem Distanzgeber an einem Ende des Verbindungsschlauchs, wobei der Distanzgeber dazu konfiguriert ist einem ausgezogenen Zustand des Rollmessbandes eine dadurch abgesteckte Distanz (D) in Bezug auf das eine Ende des Verbindungsschlauchs zuzuordnen, insbesondere wobei das Rollmessband ein festes und ein ausziehbares Ende aufweist und das ausziehbare Ende an dem anderen dem einen Ende gegenüberliegenden Ende des Verbindungsschlauchs angebracht ist und der Prozessor dazu konfiguriert ist basierend auf der bestimmten relativen Höhe (h) und der abgesteckten Distanz (D) zwischen den beiden Enden des Verbindungsschlauchs eine horizontale Distanz (d) zwischen den beiden Enden des Verbindungsschlauchs zu bestimmen.

16. Vorrichtung nach Anspruch 15, **gekennzeichnet durch** ein zweites ausziehbares elektronisches Rollmessband (39'') an dem einen Ende des Verbindungsschlauchs, wobei das erste und zweite Rollmessband (39', 39'') eine Einheit bilden, die Einheit einen Winkelgeber aufweist und der Winkelgeber dazu konfiguriert ist einen Winkelmesswert für einen Winkel (43) zu ermitteln der durch eine mittels des ersten Rollmessbands abgesteckte Distanz (D) und eine mittels des zweiten Rollmessbands abgesteckte Distanz (D') begrenzt wird.

## Claims

1. Device (1) for the determination of relative heights (h) between two points, with
• a connecting hose (2) filled with a liquid, with two opposite ends (3, 3'),
• a first and a second pressure sensor (4, 4'), arranged at the opposite ends of the connecting hose, wherein the pressure sensors are connected to one another via the liquid and the liquid is sealed from the outside in a gastight manner by the connecting hose, and wherein the first pressure sensor is configured to measure a hydrostatic pressure of the liquid at the one end of the connecting hose in the liquid and the second pressure sensor is configured to measure a hydrostatic pressure of the liquid at the other end of the connecting hose that is opposite to the one end, in the liquid, and
• a processor that is configured to determine a relative height between a first reference point (5, 5') with a fixed positional relationship to the first pressure sensor (4) and a second reference point (6, 6') with a fixed positional relationship to the second pressure sensor (4') on the basis of the hydrostatic pressures measured by the first and second pressure sensors, wherein the measured hydrostatic pressures can be assigned by the processor to the same common measurement time point, and the determination of the relative height (h) takes place on that basis,
**characterized by** further pressure sensors (27, 27', 28, 28', 28", 29, 29', 29'', 29‴) at each end of the connecting hose (3, 3'), wherein the pressure sensors at the respective end of the connecting hose (3, 3') are arranged around a common centre point (30) and have a fixed positional relationship to one another, and
in that the processor is configured
∘ to determine the relative height (h) on the basis of mean values of the pressures measured by means of the pressure sensors at the respective end of the connecting hose, and/or
∘ to determine a location of the respective end of the connecting hose in relation to a reference point (5, 5', 6, 6') on the basis of the pressures measured at the respective end of the connecting hose by means of the pressure sensors, in particular pressure differences, and also to determine the relative height (h) on the basis of the location.

2. Device according to Claim 1, **characterized by** a first and a second temperature sensor, wherein
∘ each of the temperature sensors is assigned to a pressure sensor,
∘ the first temperature sensor is configured to measure the temperature at the first pressure sensor, in particular in the liquid,
∘ the second temperature sensor is configured to measure the temperature at the second pressure sensor, in particular in the liquid, and
∘ the processor is configured to determine the relative height (h) also on the basis of the measured temperatures, in particular in order to take thermal influences on the relative height (h) into consideration.

3. Device according to any one of Claims 1 to 2, **characterized by** a synchronizer, wherein the synchronizer is configured to synchronize a first measurement time point at which the first pressure and/or temperature sensor measures with a second measurement time point at which the second pressure and/or temperature sensor measures, wherein the processor is configured to assign the measured hydrostatic pressures to the same, common measurement time point on the basis of the synchronized measurement time points.

4. Device according to Claim 3, **characterized by**
∘ a respective wireless module (26, 26') at each end of the connecting hose, wherein
∘ the sensors are connected to the respective wireless module, and
∘ the wireless module is configured to receive and to process a wireless trigger signal, and
∘ in that the synchronizer is configured to synchronize the measurement time points on the basis of a wireless trigger signal, so that the sensors measure pressure and/or temperature in a synchronized manner on the basis of the wireless trigger signal.

5. Device according to any one of Claims 1 to 4, **characterized by** further temperature sensors, and in that
∘ the connecting hose (2) comprises multiple temperature measurement regions distributed over its length,
∘ at least one of the further temperature sensors is assigned to each temperature measurement region,
∘ the further temperature sensors are configured to measure the temperature in the assigned temperature measurement region, in particular in the liquid, and
∘ the processor is configured to determine the relative height (h) also on the basis of the temperatures measured in the temperature measurement regions of the connecting hose (2), in particular in order to take thermal influences on the relative height (h) into consideration.

6. Device according to any one of Claims 1 to 5, **characterized in that** the connecting hose (2)
∘ comprises a first (44) and a second hose compartment (45),
∘ the hose compartments are separate from one another and extend adjacent to one another along the connecting hose,
∘ the first hose compartment (44) is filled with the liquid connecting the pressure sensors and the second hose compartment (45) provides a circulation region for a medium that can move therein.

7. Device according to any one of Claims 1 to 6, **characterized in that** multiple reference points (8, 8', 8", 8‴, 8ʺʺ, 8‴ʺ) with a fixed positional relationship to the pressure sensor are assigned to a pressure sensor (4; 4').

8. Device according to any one of Claims 1 to 7, **characterized by** a respective location measuring module (9) at both ends of the connecting hose, wherein the location measuring modules comprise at least one acceleration sensor and are configured to determine the location of the respective pressure sensor in relation to a reference point with a fixed positional relationship to the respective pressure sensor, and the processor is configured to determine the relative height (h) on the basis of the location of the pressure sensors
and/or
by a pressure compensating vessel (10) at one end of the connecting hose, wherein the pressure compensating vessel is configured
∘ to establish and hold constant a base pressure in the connecting hose, and/or
∘ to compensate for and/or limit an excess or negative pressure in the connecting hose with respect to an external air pressure,
in particular wherein the respective components are integrated into a respective housing, designed and configured to be handcarried, at each end of the connecting hose.

9. Device according to any one of Claims 1 to 8, **characterized by** an optical position-resolving detector (OAD) (16) at one end of the connecting hose, wherein the optical OAD (16) has a fixed positional relationship to the pressure sensor and is configured to detect optical reference radiation in a position-sensitive manner at an OAD point (18), and wherein the processor is configured to ascertain an OAD height between the pressure sensor and the OAD point, and to determine the relative height (h) on the basis of the OAD height, in particular to determine the relative height (h) between a reference point and the OAD point.

10. Device according to any one of Claims 2 to 9, **characterized by** a display (12) and/or an input keyboard with operating fields (13) at at least one end of the connecting hose, wherein the processor is configured
∘ to display, at the respective end of the connecting hose, information relating to the measured temperatures and pressures, in particular relative height positions of the connecting hose ends and the relative height (h) via the display (12), and/or
∘ to execute instructions that are input via the operating fields (13) of the input keyboard.

11. Device according to any one of Claims 1 to 10, **characterized in that** the processor is configured to be remotely controlled by a mobile computer with a display (35), in particular a touchscreen, and to display information relating to the measured temperatures and pressures, in particular relative height positions of the connecting hose ends and the relative height (h) via the display of the mobile computer,
and/or
**characterized by** a holder at at least one end of the connecting hose, wherein the holder is designed to receive and fix a mobile computer in place.

12. Device according to any one of Claims 1 to 11, **characterized by** an optical distance measuring device (21) with an inclination sensor at one end of the connecting hose, wherein the optical distance measuring device (21) has a fixed positional and orientation relationship to the pressure sensor and is configured to measure absolute distances to targeted points (23) by means of optical distance measuring radiation (22), and wherein the processor is configured to determine the relative height (h") between the one first reference point and the point targeted by the optical distance measuring device on the basis of the determined relative height (h) between the one first and the one second reference point, an inclination of the optical distance measuring radiation measured by means of the inclination sensor, and the distance measured to a targeted point (23).

13. Device according to any one of Claims 1 to 12,
**characterized by**
o a coupling device at at least one end of the connecting hose, wherein the coupling device is configured to couple and then uncouple further measuring devices, and to provide an accordingly coupled or uncoupled state to the processor as a coupling status,
o an electronic identification mark at at least one end of the connecting hose, and
o a reading device for electronic identification marks,
wherein the processor is configured to determine a relative height (h, h', h") also on the basis of at least one electronic identification mark read by the reading device and on the basis of the coupling status,
and/or
by
o a reflector (25) at one end of the connecting hose, wherein the reflector comprises a reference point that has a fixed positional relationship to the pressure sensor and is configured to reflect reference radiation of a measuring device, wherein the determination of the relative height takes place on the basis of the reference point of the reflector and/or
o a signal generator, wherein the processor is connected to the signal generator and is configured to output a signal via the signal generator on the basis of a predefined criterion that relates to the determination of a relative height.

14. Device according to any one of Claims 1 to 13,
**characterized by**
o a respective electronic board (32) at both ends of the connecting hose comprising a wireless module (26, 26'), a location measuring module (9), a temperature sensor (31) and a pressure sensor (4, 4') and connects them to one another via a data connection,
o a first connecting piece (33) at the one end of the connecting hose,
o a second connecting piece (34) at the other end of the connecting hose that is opposite to the one end, and
o a tablet computer or a smartphone (35)
wherein
o the first connecting piece (33) rigidly connects the connecting hose, the pressure sensor, a pressure compensation vessel (10) and a bleed valve (15) together, and
o the second connecting piece (34) connects the connecting hose and the pressure sensor rigidly together,
in particular wherein the connecting hose is pulled in each case over a connecting region of the first and second connecting piece, and wherein
o the wireless modules (26, 26') and the tablet computer or the smartphone (35) provide a data connection between them in order to control the device.

15. Device according to any one of Claims 1 to 14, **characterized by** a first extensible electronic measuring tape (39) with a distance transducer at one end of the connecting hose, wherein the distance transducer is configured to assign, to an extended state of the measuring tape, a distance (D) thereby surveyed in relation to the one end of the connecting hose, in particular wherein the measuring tape comprises a fixed end and an extensible end, and the extensible end is attached to the other end opposite to the one end of the connecting hose, and the processor is configured to determine a horizontal distance (d) between the two ends of the connecting hose on the basis of the determined relative height (h) and the distance (D) surveyed between the two ends of the connecting hose.

16. Device according to Claim 15, **characterized by** a second extensible electronic measuring tape (39'') at the one end of the connecting hose, wherein the first and second measuring tapes (39', 39'') form a unit, the unit comprises an angle transducer, and the angle transducer is configured to determine a measured angular value for an angle (43) enclosed between a distance (D) surveyed by means of the first measuring tape and a distance (D') surveyed by means of the second measuring tape.

## Revendications

1. Dispositif (1) pour déterminer des hauteurs relatives (h) entre deux points, comprenant :
• un tuyau de liaison (2) rempli d'un liquide et ayant deux extrémités opposées (3, 3'),
• un premier et un deuxième capteur de pression (4, 4') disposés aux extrémités opposées du tuyau de liaison, les capteurs de pression étant reliés l'un à l'autre par l'intermédiaire du liquide et le liquide étant isolé par le tuyau de liaison de manière étanche aux gaz par rapport à l'extérieur, le premier capteur de pression étant configuré pour mesurer dans le liquide une pression hydrostatique du liquide à une extrémité du tuyau de liaison et le deuxième capteur de pression étant configuré pour mesurer dans le liquide une pression hydrostatique du liquide à l'autre extrémité opposée à ladite une extrémité du tuyau de liaison, et
• un processeur, qui est configuré pour déterminer une hauteur relative entre un premier point de référence (5, 5') ayant une relation de position fixe avec le premier capteur de pression (4) et un deuxième point de référence (6, 6') ayant une relation de position fixe avec le deuxième capteur de pression (4') sur la base des pressions hydrostatiques mesurées par les premier et deuxième capteurs de pression, les pressions hydrostatiques mesurées pouvant être associées par le processeur à un même instant de mesure commun et la détermination de la hauteur relative (h) s'effectuant sur cette base,
**caractérisé par** d'autres capteurs de pression (27, 27', 28, 28', 28", 29, 29', 29", 29‴) à chaque extrémité du tuyau de liaison (3, 3'), les capteurs de pression étant disposés à l'extrémité respective du tuyau de liaison (3, 3') autour d'un centre commun (30) et ayant une relation de position fixe les uns avec les autres, et
en ce que le processeur est configuré pour
o déterminer la hauteur relative (h) sur la base de valeurs moyennes des pressions mesurées au moyen des capteurs de pression à l'extrémité respective du tuyau de liaison, et/ou
o déterminer une position de l'extrémité respective du tuyau de liaison par rapport à un point de référence (5, 5', 6, 6') sur la base des pressions, en particulier des différences de pression, mesurées au moyen des capteurs de pression à l'extrémité respective du tuyau de liaison, et pour déterminer la hauteur relative (h) également sur la base de la position.

2. Dispositif selon la revendication 1, **caractérisé par** un premier et un deuxième capteur de température, dans lequel
o chacun des capteurs de température est associé à un capteur de pression,
o le premier capteur de température est configuré pour mesurer la température au niveau du premier capteur de pression, en particulier dans le liquide,
o le deuxième capteur de température est configuré pour mesurer la température au niveau du deuxième capteur de pression, en particulier dans le liquide, et
o le processeur est configuré pour déterminer la hauteur relative (h) également sur la base des températures mesurées, en particulier pour tenir compte des influences thermiques sur la hauteur relative (h).

3. Dispositif selon l'une des revendications 1 à 2, **caractérisé par** un synchroniseur, le synchroniseur étant configuré pour synchroniser un premier instant de mesure auquel le premier capteur de pression et/ou de température mesure avec un deuxième instant de mesure auquel le deuxième capteur de pression et/ou de température mesure, le processeur étant configuré pour associer les pressions hydrostatiques mesurées à un même instant de mesure commun sur la base des instants de mesure synchronisés.

4. Dispositif selon la revendication 3, **caractérisé par**
o un module sans fil (26, 26') à chaque extrémité du tuyau de liaison, dans lequel
o les capteurs sont reliés au module sans fil respectif, et
o les modules sans fil sont configurés pour recevoir et traiter un signal de déclenchement sans fil, et
o en ce que le synchroniseur est configuré pour synchroniser les instants de mesure sur la base d'un signal de déclenchement sans fil, de sorte que les capteurs mesurent la pression et/ou la température de manière synchronisée sur la base du signal de déclenchement sans fil.

5. Dispositif selon l'une des revendications 1 à 4, **caractérisé par** d'autres capteurs de température, et en ce que
o le tuyau de liaison (2) présente plusieurs zones de mesure de la température réparties sur sa longueur,
o à chaque zone de mesure de température est associé au moins un des autres capteurs de température,
o les autres capteurs de température sont configurés pour mesurer la température dans la zone de mesure de température associée, en particulier dans le liquide, et
o le processeur est configuré pour déterminer la hauteur relative (h) également sur la base des températures mesurées dans les zones de mesure de température du tuyau de liaison (2), en particulier pour tenir compte des influences thermiques sur la hauteur relative (h).

6. Dispositif selon l'une des revendications 1 à 5, **caractérisé en ce que** le tuyau de liaison (2)
o présente une première (44) et une deuxième (45) chambre de tuyau,
o les chambres de tuyau sont séparées l'une de l'autre et s'étendent de manière adjacente l'une à l'autre le long du tuyau de liaison,
o la première chambre de tuyau (44) est remplie du liquide reliant les capteurs de pression et la deuxième chambre de tuyau (45) met à disposition une zone de circulation pour un fluide pouvant s'y déplacer.

7. Dispositif selon l'une des revendications 1 à 6, **caractérisé en ce qu'**à un capteur de pression (4 ; 4') sont associés plusieurs points de référence (8, 8', 8", 8"', 8"", 8""') ayant une relation de position fixe avec le capteur de pression.

8. Dispositif selon l'une des revendications 1 à 7, **caractérisé par** un module de mesure de position (9) à chacune des deux extrémités du tuyau de liaison, les modules de mesure de position présentant au moins un capteur d'accélération et étant configurés pour déterminer la position du capteur de pression respectif par rapport à un point de référence ayant une relation de position fixe avec le capteur de pression respectif, et le processeur étant configuré pour déterminer la hauteur relative (h) sur la base de la position des capteurs de pression,
et/ou
par un récipient d'équilibrage de pression (10) à une extrémité du tuyau de liaison, le récipient d'équilibrage de pression étant configuré pour
o régler et maintenir constante une pression de base dans le tuyau de liaison, et/ou
o équilibrer et/ou limiter une surpression ou une sous-pression dans le tuyau de liaison par rapport à une pression d'air extérieure,
en particulier dans lequel, aux deux extrémités du tuyau de liaison, les composants respectifs sont intégrés dans un boîtier respectif qui est conçu et configuré pour être porté à la main.

9. Dispositif selon l'une des revendications 1 à 8, **caractérisé par** un détecteur optique à résolution spatiale (OAD) (16) à une extrémité du tuyau de liaison, l'OAD optique (16) ayant une relation de position fixe avec le capteur de pression et étant configuré pour détecter un rayonnement optique de référence sensible à la position en un point d'OAD (18), et le processeur étant configuré pour déterminer une hauteur d'OAD entre le capteur de pression et le point d'OAD et pour déterminer la hauteur relative (h) sur la base de la hauteur d'OAD, en particulier pour déterminer la hauteur relative (h) entre un point de référence et le point d'OAD.

10. Dispositif selon l'une des revendications 2 à 9, **caractérisé par** un écran (12) et/ou un clavier d'entrée avec des champs de commande (13) à au moins une extrémité du tuyau de liaison, le processeur étant configuré pour
o afficher à l'extrémité respective du tuyau de liaison des informations concernant les températures et pressions mesurées, en particulier les positions de hauteur relative des extrémités du tuyau de liaison et la hauteur relative (h), au moyen de l'écran (12) et/ou
o exécuter des instructions entrées via les champs de commande (13) du clavier d'entrée.

11. Dispositif selon l'une des revendications 1 à 10, **caractérisé en ce que** le processeur est configuré pour être commandé à distance par un ordinateur mobile comportant un écran (35), en particulier un écran tactile, et pour afficher des informations concernant les températures et pressions mesurées, en particulier les positions de hauteur relative des extrémités du tuyau de liaison et la hauteur relative (h), au moyen de l'écran de l'ordinateur mobile,
et/ou
**caractérisé par** un support à au moins une extrémité du tuyau de liaison, le support étant conçu pour recevoir et fixer un ordinateur mobile.

12. Dispositif selon l'une des revendications 1 à 11, **caractérisé par** un appareil optique de mesure de distance (21) comportant un capteur d'inclinaison à une extrémité du tuyau de liaison, l'appareil optique de mesure de distance (21) ayant une relation de position et d'orientation fixe avec le capteur de pression et étant configuré pour mesurer des distances absolues à des points visés (23) au moyen d'un rayonnement optique de mesure de distance (22), et le processeur étant configuré pour déterminer, sur la base de la hauteur relative déterminée (h) entre le premier et le deuxième point de référence, d'une inclinaison du rayonnement optique de mesure de distance mesurée au moyen du capteur d'inclinaison et de la distance mesurée à un point visé (23), la hauteur relative (h") entre le premier point de référence et le point visé par l'appareil optique de mesure de distance.

13. Dispositif selon l'une des revendications 1 à 12, **caractérisé par**
o un dispositif d'accouplement à au moins une extrémité du tuyau de liaison, le dispositif d'accouplement étant configuré pour accoupler et désaccoupler d'autres appareils de mesure et pour mettre à disposition un état accouplé ou désaccouplé correspondant en tant qu'état d'accouplement au processeur,
o une marque d'identification électronique à au moins une extrémité du tuyau de liaison, et
o un lecteur de marques d'identification électroniques,
le processeur étant configuré pour déterminer une hauteur relative (h, h', h") également sur la base d'au moins une marque d'identification électronique lue par le lecteur et de l'état d'accouplement,
et/ou
par
o un réflecteur (25) à une extrémité du tuyau de liaison, le réflecteur présentant un point de référence qui a une relation de position fixe avec le capteur de pression et étant configuré pour réfléchir un rayonnement de référence d'un appareil de mesure, la détermination de la hauteur relative étant effectuée sur la base du point de référence du réflecteur et/ou
o un émetteur de signaux, le processeur étant relié à l'émetteur de signaux et étant configuré pour émettre au moyen de l'émetteur de signaux un signal sur la base d'un critère prédéfini qui concerne la détermination d'une hauteur relative.

14. Dispositif selon l'une des revendications 1 à 13, **caractérisé par** :
o une carte électronique (32) à chacune des deux extrémités du tuyau de liaison, qui présente un module sans fil (26, 26'), un module de mesure de position (9), un capteur de température (31) et un capteur de pression (4, 4'), et les relie entre eux par une liaison de données,
o une première pièce de liaison (33) à l'une des extrémités du tuyau de liaison,
o une deuxième pièce de liaison (34) à l'autre extrémité du tuyau de liaison opposée à ladite une extrémité, et
o une tablette informatique ou un smartphone (35), dans lequel
o la première pièce de liaison (33) relie rigidement entre eux le tuyau de liaison, le capteur de pression, un récipient d'équilibrage de pression (10) et une soupape de purge (15), et
o la deuxième pièce de liaison (34) relie rigidement entre eux le tuyau de liaison et le capteur de pression,
en particulier dans lequel le tuyau de liaison recouvre respectivement une zone de liaison des première et deuxième pièces de liaison, et dans lequel
o les modules sans fil (26, 26') et la tablette informatique ou le smartphone (35) mettent à disposition une liaison de données entre eux pour commander le dispositif.

15. Dispositif selon l'une des revendications 1 à 14, **caractérisé par** un premier ruban de mesure électronique déroulant extensible (39) comportant un capteur de distance à une extrémité du tuyau de liaison, le capteur de distance étant configuré pour associer à un état étiré du ruban de mesure déroulant une distance (D) ainsi fixée par rapport à ladite une extrémité du tuyau de liaison, en particulier dans lequel le ruban de mesure déroulant présente une extrémité fixe et une extrémité extensible, et l'extrémité extensible est attachée à l'autre extrémité du tuyau de liaison opposée à ladite une extrémité, et le processeur est configuré pour déterminer une distance horizontale (d) entre les deux extrémités du tuyau de liaison sur la base de la hauteur relative déterminée (h) et de la distance (D) fixée entre les deux extrémités du tuyau de liaison.

16. Dispositif selon la revendication 15, **caractérisé par** un deuxième ruban de mesure électronique déroulant extensible (39") à ladite une extrémité du tuyau de liaison, le premier et le deuxième ruban de mesure déroulant (39', 39") formant une unité, l'unité présentant un capteur angulaire, le capteur angulaire étant configuré pour déterminer une valeur de mesure angulaire pour un angle (43) délimité par une distance (D) fixée par le premier ruban de mesure déroulant et une distance (D') fixée par le deuxième ruban de mesure déroulant.
